(19) Europäisches Patentamt European Patent Office Office européen des brevets

(11) **EP 1 930 840 A2**

(12) **EUROPEAN PATENT APPLICATION**

(43) Date of publication:
**11.06.2008 Bulletin 2008/24**

(51) Int Cl.:
*G06K 9/00* *(2006.01)*    *H04N 1/21* *(2006.01)*
*G06Q 10/00* *(2006.01)*    *G07D 7/00* *(2006.01)*

(21) Application number: **07111742.8**

(22) Date of filing: **04.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.12.2006 JP 2006328525**

(71) Applicant: **CANON KABUSHIKI KAISHA Ohta-ku, Tokyo (JP)**

(72) Inventors:
• **Kunori, Shiro**
  **Tokyo 146-8501 (JP)**
• **Kobashi, Kazufumi**
  **Tokyo 146-8501 (JP)**

(74) Representative: **TBK-Patent**
  **Bavariaring 4-6**
  **80336 München (DE)**

(54) **Image processing apparatus and method**

(57)    The invention provides an image processing apparatus and a method therefor capable of registering a paper fingerprint at a position that considers a matching accuracy and security. The image forming apparatus executes: a paper fingerprint acquisition step of reading a paper fingerprint (S1101-S1104); a paper fingerprint registration determination step of determining whether paper fingerprint information acquired in the paper fingerprint information acquisition step is suitable as a paper fingerprint for paper (51105-51107) ; and a paper fingerprint registration step of registering a paper fingerprint detected in the paper fingerprint registration determination step as a paper fingerprint for the paper (s803).

FIG.1

**Description**

BACKGROUND OF THE INVENTION

Field of the Invention

The present invention relates to an image processing apparatus and an image processing method, and more specifically, to an image processing apparatus capable of handling information of paper fiber, a so-called paper fingerprint information, an image processing method therefor, a program therefor, and a recording medium therefor.

Description of the Related Art

Conventionally, there is technique of embedding auxiliary data, such as a model number, in image data for the purpose of follow-up investigation of a counterfeit copy of a document in a digital multi-function machine. Moreover, in the processing of embedding the auxiliary data, there exist a technique of embedding the auxiliary data in a place hard for a thirdperson to find it at the time of embeddingprocessing in order to prevent the auxiliary data to be easily found from a printed image and decoded by the third person. For example, such a technique is disclosed in Japanese Patent Laid-Open No. 2004-214831.

Moreover, there is a technique with the purpose to guarantee originality of a document whereby an irreproducible disorder part included in the image information on the image data is extracted and the extracted data and the disorder part extracted at the time of reading are compared. Then, based on the comparison result, it is determined whether the read original is the original. For example, such a technique is disclosed in Japanese Patent Laid-Open No. 2004-153405.

Moreover, as a technique of reading information of paper fiber, there is a technique whereby the information of the fiber is read, with a mark added to a paper form used as a reference, and this information of fiber is converted to a predetermined pattern and is printed. For example, such a technique is disclosed in Japanese Patent Laid-Open No. 2004-112644.

Furthermore, as a technique of changing an area of added data to be embedded in paper, such a technique is disclosed in Japanese Patent Laid-Open No. 2001-127983.

However, the technique disclosed in Japanese Patent Laid-Open No. 2004-214831 embeds auxiliary data for follow-up investigation of a counterfeit copy in an image part of a paper form and renders it difficult to find. This technique has an effect of rendering it difficult to forge but has a problem that if the auxiliary data embedded in the image section is hidden by cut and paste being performed, the counterfeiting will become possible.

Moreover, a technique disclosed in Japanese Patent Laid-Open No. 2004-153405 is a technique to guarantee the originality by using a characteristic of a disorder part in the image data that cannot be reproduced. In the case of this technique, the disorder part means scattering of toner to be placed on the paper form, shaggy part of a line edge, etc., and works to guarantee the originality of the paper form using information that is drawn (added) on the paper form. Therefore, in the case where the disorder part being expected is not generated or other cases, there is a problem that it becomes no longer possible to guarantee the originality.

Moreover, the technique disclosed in Japanese Patent Laid-OpenNo. 2004-112644 is a technique of determining a read area, with a mark added to the paper form used as a reference, but it does not consider whether this area is a suitable area as a paper fingerprint area. Therefore, there is a problem that this technique determines an area that cannot be read correctly, such as a solid black area, as a read area.

Furthermore, the technique disclosed in Japanese Patent Laid-Open No. 2001-127983 A is a technique of obtaining a mean density of a predetermined area and determining an area in which added data is embedded, but it does not consider a collation rate after the area is altered. Therefore, in the case where an area with a low collation rate, such as a solid black area, extends in the vicinity of a predetermined area, there is a problem that even when an area is altered according to the mean density, the added data would be embedded in an area in which paper fingerprint cannot be read correctly.

SUMMARY OF THE INVENTION

The present invention was made in view of such a problem, and its object is to provide an image processing apparatus capable of registering a paper fingerprint at a position that matching accuracy and security are considered and a method therefor.

In order to attain such an object, an image processing apparatus of the present invention is an image processing apparatus that has a paper fingerprint information acquisition unit for reading a paper fingerprint and a paper fingerprint information collation unit for reading paper fingerprint information acquired by the paper fingerprint information acquisition unit and collating it with other paper fingerprint information, characterized in that the paper fingerprint information acquisition unit includes an image are detection unit for detecting a location where an image area are included, as the paper fingerprint acquisition area.

In order to attain the above-mentioned object, an image formation method of the present invention is an image formation method of a system capable of scanning paper and specifying the paper based on a characteristic of its fiber, characterized by comprising a paper fingerprint information acquisition step of reading a paper fingerprint by a paper fingerprint information acquisition unit and a paper fingerprint information collation step of reading paper fingerprint information acquired in the paper fingerprint information acquisition step by a paper fingerprint information collation unit and collating it with paper fingerprint information, and further characterized in that the paper fingerprint information acquisition step includes an image area detection step of detecting a location where an image area are included, as the paper fingerprint acquisition area, by an image area detection unit.

In order to attain the above-mentioned object, the image processing apparatus of the present invention is characterized by comprising a paper fingerprint information acquisition unit for reading a paper fingerprint, an area determination unit for determining an area to acquire paper fingerprint information by the paper fingerprint information acquisition unit, and a paper fingerprint registration unit for registering a paper fingerprint of the area determined by the area determination unit as a paper fingerprint for the paper.

In order to attain the above-mentioned object, the image formation method of the image processing apparatus of the present invention is characterized by comprising a paper fingerprint information acquisition step of reading a paper fingerprint by a paper fingerprint information acquisition unit, an area determination step of determining an area to acquire paper fingerprint information in the paper fingerprint information acquisition step by an area determination unit, and a paper fingerprint registration step of registering a paper fingerprint in the area determined in the area determination step as a paper fingerprint for paper by a paper fingerprint registration unit.

According to the present invention, when performing originality guarantee and duplication prevention using a paper fingerprint that is a characteristic of paper itself, an effect of making it possible to prevent interference against security by the user is produced. Moreover, since also in paper with much of printing (paper with few non-image areas), a paper fingerprint area of a high collation rate can be found, an effect of making it possible to set and register paper fingerprints in more amount of paper is produced.

Further features of the present invention will become apparent from the following description of exemplary embodiments (with reference to the attached drawings).

BRIEF DESCRIPTION OF THE DRAWINGS

FIG. 1 is a diagram sowing a whole configuration of an image forming apparatus of an embodiment to which the present invention can be applied;

FIG. 2 is an appearance diagram of an input/output device of the image forming apparatus of the embodiment to which the present invention can be applied;

FIG. 3 is a diagram showing a whole configuration of the image forming apparatus of the embodiment to which the present invention can be applied;

FIG. 4 is a diagram conceptually showing tile data of the embodiment to which the present invention can be applied;

FIG. 5 is a block diagram of the scanner image processing section of the embodiment to which the present invention can be applied;

FIG. 6 is a block diagram of the printer image processing section of the embodiment to which the present invention can be applied;

FIG. 7 is an explanatory diagram of a copy screen of a control panel of the embodiment to which the present invention can be applied;

FIG. 8 is a flowchart of paper fingerprint information acquisition processing of the embodiment to which the present invention can be applied;

FIG. 9 is a flowchart of paper fingerprint information collation processing of the embodiment to which the present invention can be applied;

FIG. 10 is a flowchart showing overall processing in a first embodiment of the present invention;

FIG. 11 is a flowchart showing details of an image area detection unit in the first embodiment of the present invention;

FIGS. 12A and 12B are conceptual diagrams of edge determination processing in the first embodiment of this invention; in which FIG. 12A shows a case of determining character-photograph areas, FIG. 12B shows a case where a characters or photograph area is determined;

FIGS. 13A to 13C are conceptual diagrams in paper fingerprint area determination in the first embodiment of the present invention; in which FIG. 13A is a diagram with a determination result of zero, FIG. 13B is a diagram with a determination result of nine, and FIG. 13C is a diagram with a determination result of four;

FIG. 14 is a flowchart showing a security setting unit in the first embodiment of the present invention;

FIG. 15 is an explanatory diagram of a security setting screen in the first embodiment of the present invention;

FIG. 16 is a flowchart showing overall processing at the time of a paper fingerprint information acquisition mode in the first embodiment of the present invention;

FIG. 17 is a flowchart showing overall processing at the time of a paper fingerprint information collation mode in the first embodiment of the present invention;

FIG. 18 is a flowchart of the image area detection unit at the time of security setting in the first embodiment of the present invention;

FIG. 19 is a flowchart showing a collation rate setting unit in the first embodiment of the present invention;

FIG. 20 is a diagram of a collation rate setting screen in the first embodiment of the present invention;

FIG. 21 is a flowchart of the image area detection unit at the time of setting a collation rate in the first embodiment of the present invention;

FIG. 22 is a diagram showing an example of an error message at the time of acquiring paper fingerprint information in the first embodiment of the present invention;

FIG. 23 is a diagram showing an example of an alarm message at the time of acquiring paper fingerprint information in the first embodiment of the present invention;

FIG. 24 is a flowchart of paper fingerprint information acquisition processing in which the image data in the first embodiment of the present invention is included in paper fingerprint information;

FIG. 25 is a diagram showing paper fingerprint information already registered and paper fingerprint information just acquired this time in an embodiment to which the present invention can be applied;

FIG. 26 is a diagram showing an example of an internal configuration of the image forming apparatus of the embodiment to which the present invention can be applied;

FIG. 27 is a diagram showing an example of an internal configuration of the image forming apparatus in the second embodiment of the present invention;

FIG. 28 is a flowchart showing the overall processing at the time of a paper fingerprint information acquisition mode in the second embodiment of the present invention;

FIG. 29 is a flowchart showing details of the image area detection unit in a third embodiment of the present invention;

FIG. 30 is a diagram showing an example of a start point and a determination area in the third embodiment of the present invention;

FIG. 31 is a diagram showing an example of alteration of the determination area in the third embodiment of the present invention;

FIG. 32 is a flowchart showing details of the image area detection unit in a fourth embodiment of the present invention;

FIG. 33 is a diagram showing an example of alteration of a determination area in the fourth embodiment of the present invention;

FIG. 34 is a flowchart showing processing at the time of receiving print data in a fifth embodiment of the present invention;

FIGS. 35A and 35D are diagrams showing respective methods for finding in the embodiments to which the present invention can be applied; in which FIG. 35A shows the way of finding $E_{1 \times 1}$, FIG. 35B shows the way of finding $E_{2 \times 1}$, FIG. 35C shows the way of finding $E_{n \times 1}$, and FIG. 35D shows the way of finding $E_{2n-1 \times 1}$;

FIGS. 36A and 36B are diagrams showing respective methods for finding embodiments to which the present invention can be applied; in which FIG. 36A shows the way of finding $E_{2n-1 \times 2}$, and FIG. 36B shows the way of finding $E_{2n-1 \times 1}$; and

FIGS. 37A and 37B are diagrams showing respective methods for finding embodiments to which the present invention can be applied; in which FIG. 37A shows the way of finding $E_{n \times m}$, and FIG. 37B shows the way of finding $E_{2n-1 \times 2m-1}$.

DESCRIPTION OF THE EMBODIMENTS

Hereafter, embodiments to which the present invention can be applied will be described in detail with reference to the drawings. Note that in each drawing referred to in this specification, constituents having a similar function are designated by the same reference numerals.

First embodiment

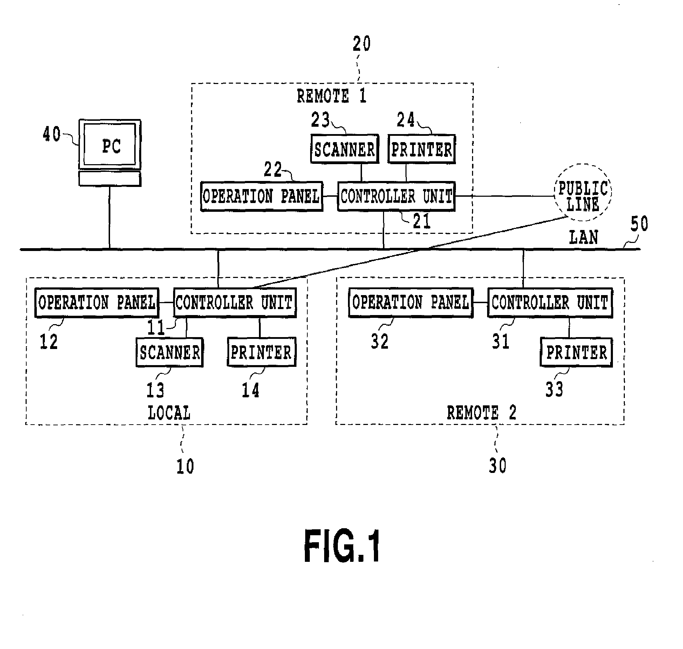

<Printing system (FIG. 1)>

A first embodiment will be described in detail with reference to the drawings. FIG. 1 is a block diagram showing a configuration of a printing system according to an embodiment of the present invention. In this system, a host computer 40 and three image forming apparatuses (10, 20, and 30) are connected to a LAN 50. However, in the printing system in this embodiment, the number of connections of these constituents is not limited to this. Moreover, although in this embodiment, the LAN is applied as a connection method, the embodiment is not limited to this. For example, an arbitrary network of a WAN (public line) etc., a serial transmission method of USB etc., a parallel transmission system of Centronics, SCSI, etc. are applicable.

The host computer (hereafter called PC) 40 has functions of a personal computer. This PC 40 can send/receive a file and send/receive an E-mail using an FTP or SMB protocol through the LAN 50 or WAN. Moreover, the PC 40 can instruct printing to the image forming apparatuses 10, 20, and 30 through a printer driver.

The image forming apparatus 10 and the image forming apparatus 20 are apparatuses having the same configuration. The image forming apparatus 30 is an image forming apparatus only with a printing function and does not have a scanner section that the image forming apparatuses 10 and 20 have. Below, the image forming apparatus 10 out of the image forming apparatuses 10 and 20 is paid attention and its configuration will be described in detail.

The image forming apparatus 10 consists of a scanner section 13 that is an image input device, a printer section 14 that is an image output device, a controller unit 11, and an operation panel 12 that is a user interface (UI). The controller 11 takes charge of motion control of an image forming apparatus 10 as a whole.

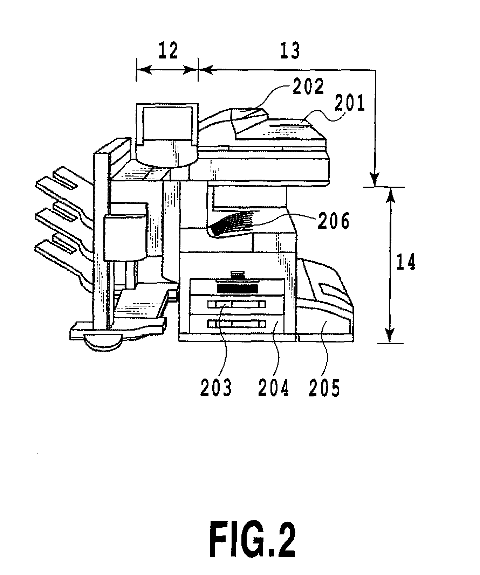

<Image forming apparatus 10 (FIG. 2)>

FIG. 2 shows appearance of an image forming apparatus 10 . The scanner section 13 has a plurality of CCD's . If the CCD's have respective different sensitivities, even when the density of each pixel is the same, the pixels are recognized to have respective different densities. Therefore, first, the scanner section exposure-scans a white board (uniformly white board) and converts the amount of reflected light obtained by exposure-scanning into an electrical signal, and outputs it to the controller 11. As will be described later, a shading correction section 500 in the controller 11 recognizes differences of the respective CCD's based on electrical signals obtained the respective CCD's. Then, using the differences of sensitivities that were recognized, values of electrical signals obtained by scanning an image on a original are corrected. Moreover, when the shading correction section 500 receives information of gain adjustment from a CPU 301 in the controller 11 that will be described later, it will perform gain adjustment according to the information concerned. The gain adjustment is performed to adjust as to how a value of electrical signal obtained by exposure-scanning the original is assigned to luminance signal values ranging 0-255. This gain adjustment enables a value of the electrical signal obtained by exposure-scanning the original to be converted into a high luminance signal value or into a low luminance signal value. Next, a configuration to scan an image on this original will be explained.

The scanner section converts information of an image into an electrical signal by exposure-scanning the image on the original and inputting the obtained reflected light into the CCD. Moreover, it converts the electrical signal into brightens signals of R, G, and B colors and outputs the luminance signals concerned into the controller 11 as image data.

Incidentally, the original is set in a tray 202 of a original feeder 201. When the user instructs start of reading from the operation panel 12, a original read instruction will be given to the scanner section 13 from the controller 11. When the scanner section 13 receives this instruction, a reading operation of the original will be performed by feeding the original from the tray 202 of the original feeder 201 one by one. Incidentally, a original read method may be not the automatic feeding method by the original feeder 201, but a method for scanning the original by moving an exposure section with the original placed on an unillustrated glass surface.

A printer section 14 is an image formation device for rendering the image data received from the controller 11 on a paper form. Incidentally, although the image formation method was the electrophotographic method that used a photo conductor drum or photoconductor belt in this embodiment, it is not limited to this. For example, this embodiment can be applied to an ink jet method for performing printing on a paper form by discharging inks from a micro nozzle array. Moreover, the printer part 14 is provided with a plurality of paper form cassettes 203, 204, and 205 that enable different paper form sizes or different paper form orientations to be selected. A paper form after printing is discharged to a paper discharge tray 206.

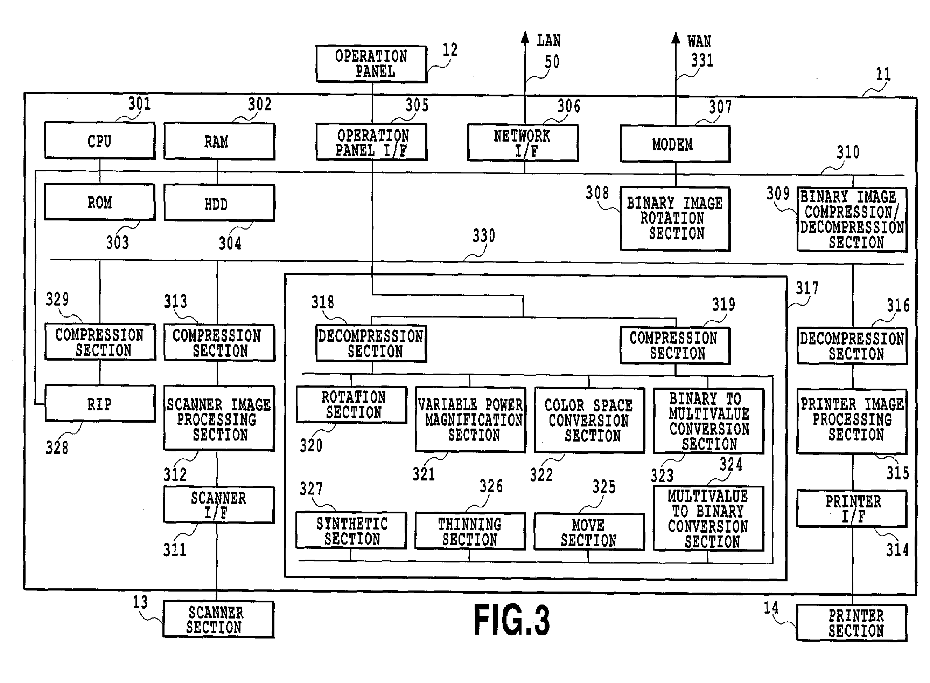

<Detailed explanation of a controller 11 (FIG. 3)>

FIG. 3 is a block diagram for explaining a configuration of the controller 11 of the image forming apparatus 10 in further details.

The controller 11 is electrically connected with the scanner section 13 and the printer section 14, and at the same time is connected with the PC 40 and external devices through the LAN 50 and a WAN 331. This connection enables input and output of image data and device information.

The CPU 301 systematically controls accessing with various devices being connected based on a control program stored in ROM 303 etc. and also systematically controls various processing performed inside the controller. RAM 302 is system work memory on which the CPU 301 operates, and is also the memory for temporarily storing image data. This RAM 302 is constructed with SRAM for holding stored contents even after a power supply is turned off and DRAM that allows stored contents to be erased after the power supply is turned off. The ROM 303 stores a boot program of the system etc. An HDD 304 is a hard disk drive, which enables system software and image data to be stored.

An operation panel I/F 305 is an interface section for connecting the system bus 310 and the operation panel 12. This operation panel I/F 305 receives image data to be displayed on the operation panel 12 from the system bus 310 and outputs it to the operation panel 12, and also outputs information inputted from the operation panel 12 to the system bus 310.

A network I/F 306 connects with the LAN 50 and a system bus 310, and performs input/output of information. A modem 307 connects with the WAN 331 and the system bus 310, and performs input/output of information. A binary image rotation section 308 converts an orientation of the image data before transmission. A binary image compression/decompression section 309 converts resolution of image data before transmission into predetermined resolution or resolution that matches the other party's capability. In performing compression and decompression, any of methods of JBIG, MMR, MR, MH, etc. is used. An image bus 330 is a transmission path for exchanging image data, and is made up of a PCI bus or IEEE1394.

The scanner image processing section 312 performs correction, processing, and editing on the image data received from the scanner section 13 through a scanner I/F 311. In addition, the scanner image processing section 312 determines whether the received imaged data is a color original or monochrome original, a character original or photograph original, and the like. Then, it attaches the determination result to the image data. Such attached information is called attribute data. Details of the processing performed in this scanner image processing section 312 will be described later.

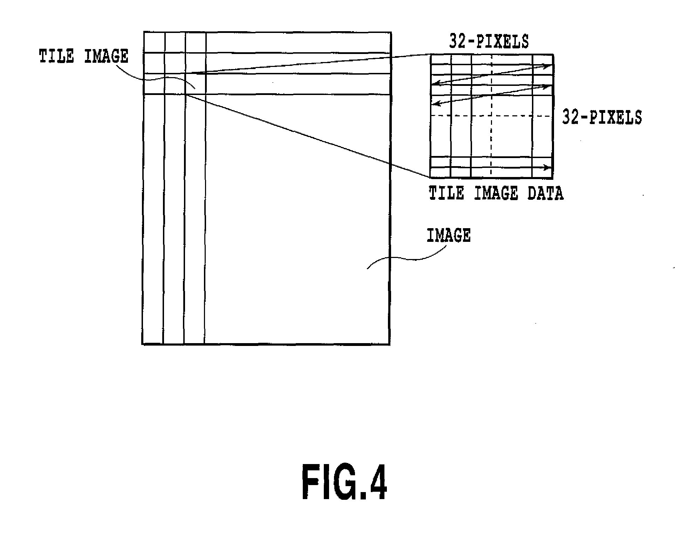

The compression section 313 receives the image data and divides this image data into $32 \times 32$ pixel blocks. Incidentally, this image data of $32 \times 32$ pixels is called tile data. FIG. 4 shows a fundamental concept of this tile data. An area in a original (paper medium before reading) that corresponds to this tile data is called tile image. The tile data is given mean luminance information and a coordinate position on the original of the tile image in the $32 \times 32$-pixel block as its header information. Moreover, a compression section 313 compresses the image data consisting of a plurality of tile data. A decompression section 316 decompresses the image data consisting of a plurality of tile data, subsequently rasterizes it, and sends the rasterized data to a printer image processing section 315.

The printer image processing section 315 receives the image data sent from the decompression section 316, and performs image processing on the image data while referring to attribute data attached to this image data. The image data after the image processing is outputted to the printer section 14 through a printer I/F 314. Details of processing performed in this printer image processing section 315 will be described later.

An image conversion section 317 performs predetermined conversion processing on the image data. This processing section is constructed with processing sections as shown below.

A decompression section 318 decompresses the received image data. A compression section 319 compresses the received image data. A rotation section 320 rotates the received image data. A variable power magnification section 321 performs resolution conversion processing (for example, from 600 dpi to 200 dpi) on the received image data. A color space conversion section 322 converts the color space of the received image data. This color space conversion section 322 can perform publicly known background removal processing using a matrix or table, perform publicly known LOG conversion processing (RGB to CMY), and perform publicly known output color correction and processing (CMY to CMYK) . A binary to multivalue conversion section 323 converts received binary image data into 256 gray-scale image data. Conversely, a multivalue to binary conversion section 324 converts received 256 gray-scale image data into binary image data using a technique of error diffusion processing or the like.

A synthetic section 327 synthesizes received two pieces of image data and generates one piece of image data. When two pieces of image data are synthesized, either a method whereby a mean value of luminance values of the two pixels of image data to be synthesized is assigned as a synthetic luminance value or a method whereby a luminance value of one pixel brighter in the luminance level than the other pixel is assigned as a luminance value of the pixel after synthesis is applied. Alternatively, a method of assigning a luminance value of one pixel darker than the other to the pixel is also usable. Further alternatively, a method of determining a luminance value after the synthesis by an OR operation, an AND operation, an exclusive OR operation of the two pixels to be synthesized, or the like can be applied. Any of these synthetic methods is the well-known technique. A thinning section 326 performs resolution conversion by thinning out the pixels of received image data, generating image data of 1/2-, 1/4-, and 1/8-times resolution etc. A move section 325 attaches a blank space to the received image data, or deletes a blank space.

RIP 328 receives intermediate data sent from the PC 40 and is generated based on the PDL code data and creates bit map data (multivalued).

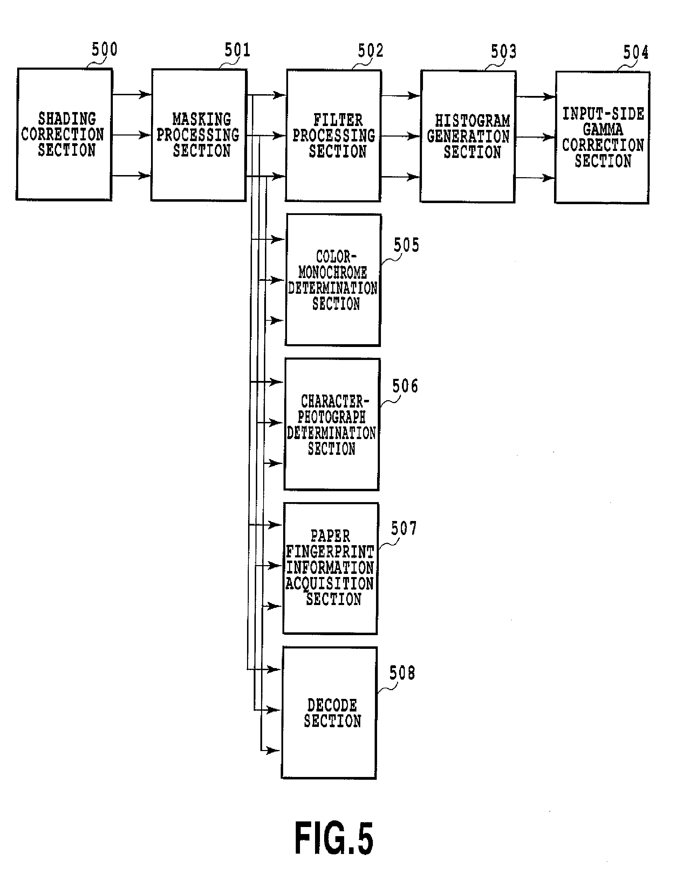

<Detailed explanation of a scanner image processing section 312 (FIG. 5)>

FIG. 5 shows an internal configuration of the scanner image processing section 312. The scanner image processing section 312 receives the image data consisting of 8-bit luminance signals of RGB. The shading correction section 500 performs shading correction on these luminance signals. The shading correction is processing such that brightness of the original is prevented from being erroneously recognized by variation in the sensitivity of the CCD. Furthermore, as described above, this shading correction section 500 is configured to be capable of gain adjustment according to an instruction from the CPU 301. Following this, these luminance signals are converted to standard luminance signals each of that does not depend on a filter color of the CCD by a masking processing section 501.

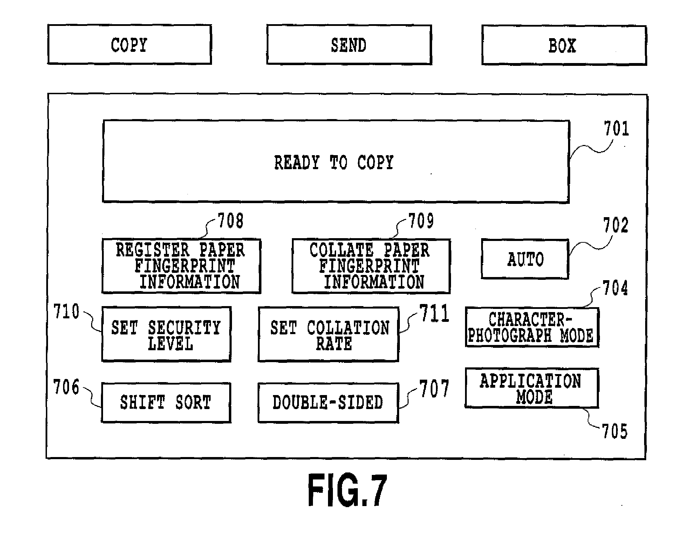

A filter processing section 502 corrects spatial frequencies of the received image data arbitrarily. This processing section performs arithmetic processing on the received image data, for example, using a matrix of 7×7. Incidentally, the user is allowed to select a character mode, a photograph mode, and character-photograph mode as a copy mode by pressing a tab 704 in FIG. 7. Here, when the character mode is selected by the user, the entire image data is filtered with a filter for character by the filter processing section 502. Moreover, when the photograph mode is selected, the entire image data is filtered with a filter for photograph. Moreover, when a character-photograph mode is selected, a filter is switched over for each pixel in an adaptive manner according to a character-photograph determination signal (a part of the attribute data) . That is, itisdeterminedwhether the filter for photograph is used for every pixel or the filter for character is used. Moreover, a coefficient for performing smoothing only on high frequency components is set up in the filter for photograph. This is for not highlighting the roughness of the image. Moreover, the filter for character is given a coefficient to perform rather strong edge enhancement. This is for enhancing the sharpness of a character.

A histogram generation section 503 samples luminance data of each pixel that constitutes the received image data. More specifically, luminance data in a rectangular area surrounded by a start point and an end point specified in the principal scanning direction and a sub scanning direction, respectively, is sampled in a constant pitch in the principal scanning direction and the sub scanning direction. After that, histogram data is generated based on the sampling results. The generated histogram data is used to estimate a ground level when performing the background removal processing. An input-side gamma correction section 504 converts the luminance data into one that has nonlinearity using a table etc.

A color-monochrome determination section 505 determines whether each pixel constituting the received image data is chromatic color, or colorless, and attaches the determination result to the image data as a color-monochrome determination signal (a part of attribute data).

Based on a pixel value of each pixel and pixel values of surrounding pixels of the each pixel, a character-photograph determination section 506 determines: whether each pixel constituting the image data is a pixel constituting a character; whether it is a pixel constituting a halftone dot or a character in the dot; and whether it is a pixel constituting an overall uniform image. Incidentally, a pixel that does not belong to any pixel described above is a pixel that constitutes a white image area. Then, its determination result is attached to the image data as a character-photograph determination signal (a part of attribute data) .

A paper fingerprint information acquisition section 507 acquires image data of a predetermined area in RGB image data inputted from the shading correction section 500.

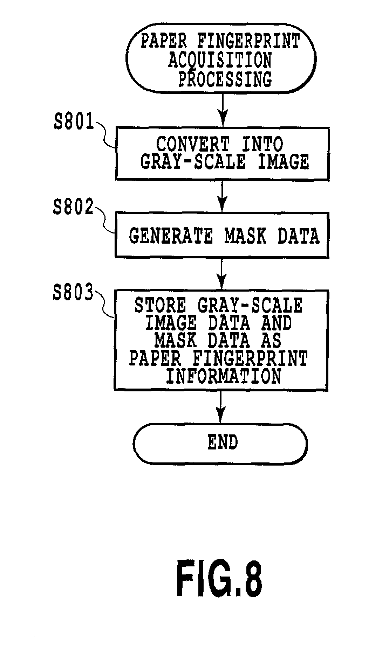

FIG. 8 is a flowchart showing paper fingerprint information acquisition processing that this paper fingerprint information acquisition section 507 performs.

In Step S801, the image data extracted by the paper fingerprint information acquisition section 507 is converted into image data of a gray scale. In Step S802, mask data for performing collation is generated by eliminating possible factors of erroneous determination, such as printing and hand-written characters, from the image as converted into the image data of a gray scale in Step S801. The mask data is binary data consisting of "0" or "1." In the image data of a gray scale, a mask data value for any pixel whose luminance signal value is equal to or more than the first threshold (namely, being bright) is set to "1." The mask data value for any pixel whose luminance signal value is less than the first threshold is set to "0." The above processing is performed on each pixel that is included in the image data of a gray scale. In Step S803, the following two pieces of data are acquired as paper fingerprint information: the image data having been converted into data of a gray scale in Step S801; and the mask data generated in Step S802.

The paper fingerprint information acquisition section 507 sends the paper fingerprint information of the predetermined area to the RAM 302 using an unillustrated data bus. These processing steps constitute a basic flow of paper fingerprint information acquisition processing.

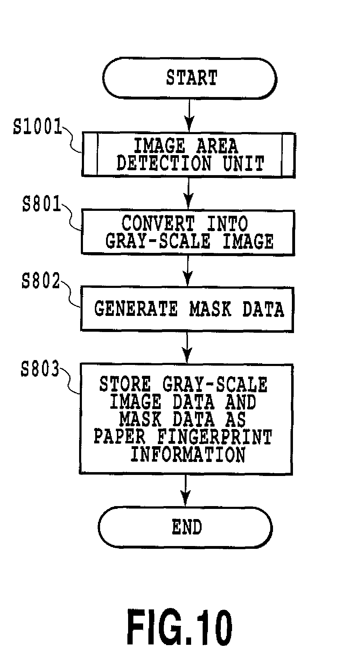

FIG. 10 is a flowchart showing the above-mentioned paper fingerprint information acquisition processing to which processing of detecting an acquisition area is added. Step S1001 shows an image area detection unit for detecting an area to acquire paper fingerprint information for image data extracted by the paper fingerprint information acquisition section 507. Detailed processing will be described later. The next Step S801 and subsequent steps are just as described above.

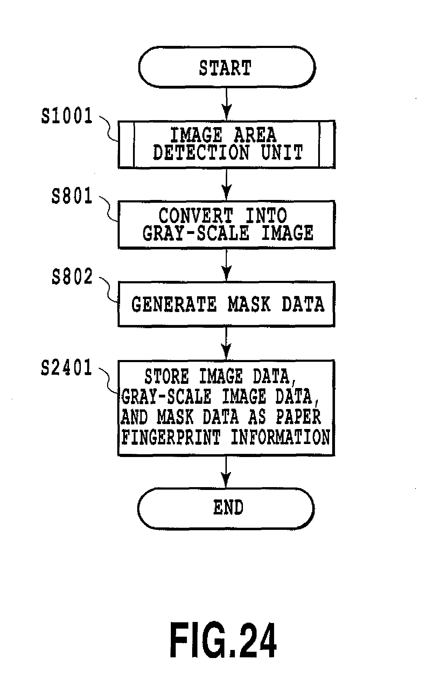

FIG. 24 is a flowchart showing the above-mentioned paper fingerprint information acquisition processing to which processing of attaching image data to paper fingerprint information is added. Step S1001 is just as described above. Steps 801, 802 are also just as described above. In Step S2401, the following data is acquired as paper fingerprint data: image data acquired in Step S1001; gray-scale image data created in Step S801; and the mask data generated in Step S802. The paper fingerprint information acquisition section 507 sends the above-mentioned paper fingerprint information to the RAM 302 using an unillustrated data bus. When performing the processing shown by the flowchart of FIG. 24 to add the image data to paper fingerprint information, processing added with image data collation is performed also in the paper fingerprint information collation processing.

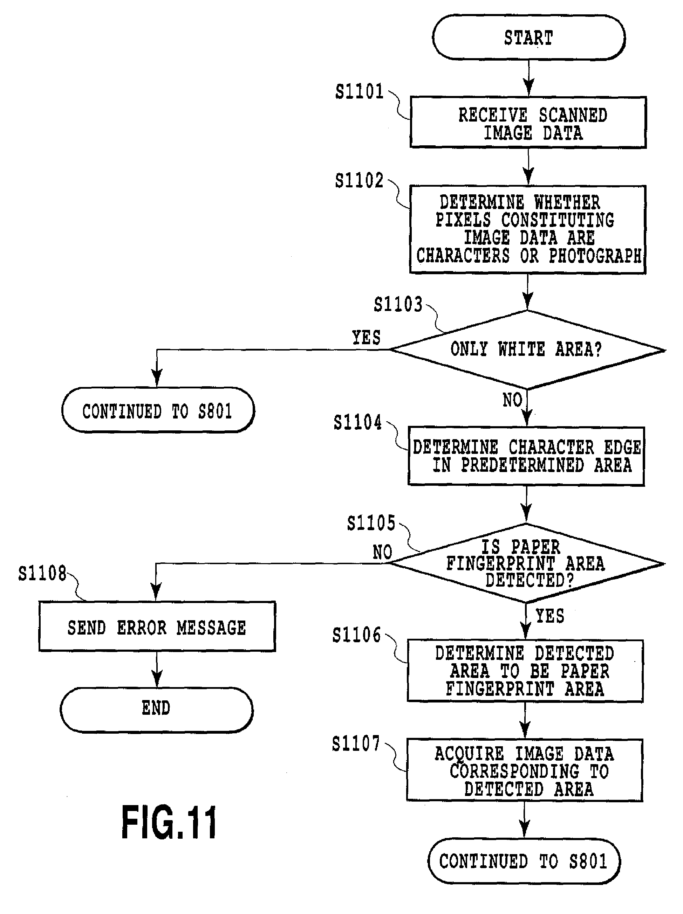

FIG. 11 is a flowchart showing processing in Step S1001 in detail. In Step S1101, the scanner image processing section 312 receives the image data read by the scanner section 13 through the scanner I/F 311. In Step S1102, the character-photograph determination section 506 of FIG. 5 determines whether image data received in the previous step is an image area, such as a character and a photograph, or a non-image area bit by bit (pixel by pixel). A determination result is represented by a 1-bit signal. The determination result of image data is registered as an image/non-image information area information, and is sent to the RAM 302 using an unillustrated data path.

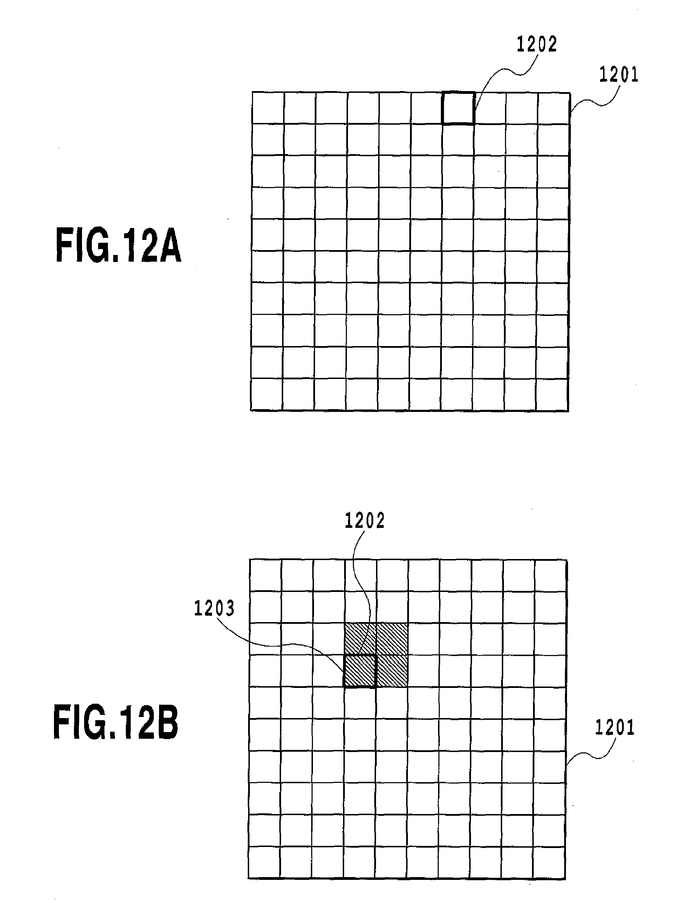

For example, the character-photograph determination section 506 determines a character-photograph area bit by bit (pixel by pixel) 1202 on image data 1201 as shown by FIGS. 12A and 12B. FIG. 12A is a diagram for a case of determining a character-photograph area; FIG. 12B is a diagram for a case where an area is determined as a character or photograph. When the bit (pixel) currently being inspected is determined as a character or photograph, the bit (pixel) is registered as an image area ("1" in a "0/1" signal) (Step S1203) . In Step S1103, it is determined whether an image are is found in the whole image data as a result of character-photograph determination performed in the image data in the previous step. If the whole image data is determined to be a non-image area, a paper fingerprint area is fixed at an arbitrary position and the flow proceeds to Step S801. If it is determined that there is an image area in the image data, the flow proceeds to Step S1104. In Step S1104, the image/non-image area determination information on the image data processed in the previous Step S1102 is acquired, and edge determination is preformed at a predetermined area size by which paper fingerprint information is acquired for the information. The edge determination is to determine how many image areas are included in the whole area by adding a bit value of a predetermined area size MXN based on the image/non-image area determination information.

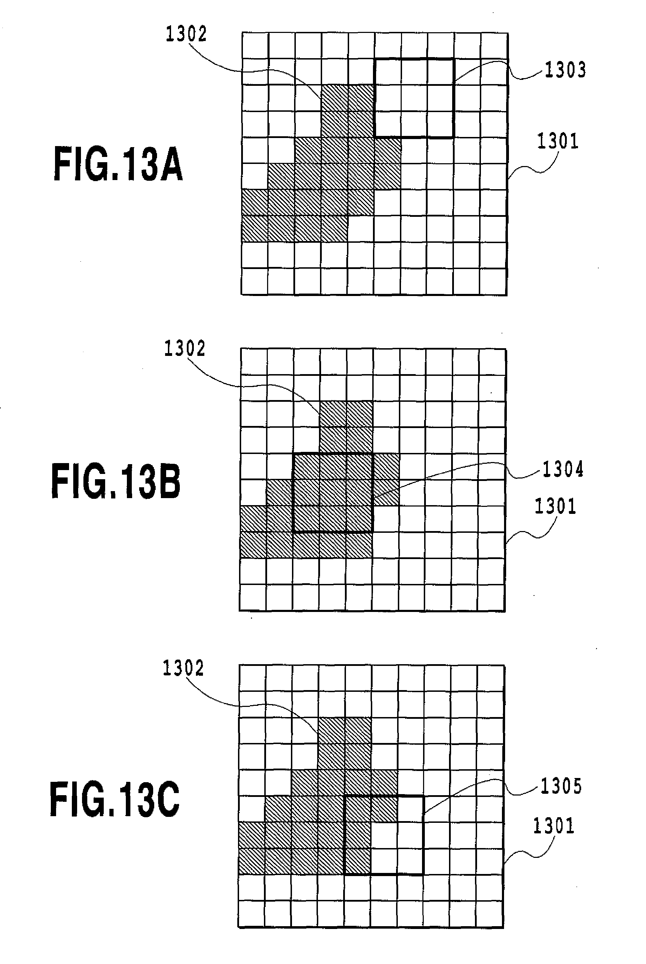

For example, consider that the edge determination is intended to be done in the predetermined area 1303 (thick frame of 3×3) in image/non-image determination information 1301 as shown in FIGS. 13A to 13C. FIGS. 13A, 13B, and 13C are figures in the cases of the determination results of zero, nine, and four, respectively. A reference numeral 1302 (half tone dot) shall show an image area. In the case of a predetermined area 1303 of FIG. 13A, since it includes only non-image areas ("0" signal), the determination result becomes zero. In the case of a predetermined area 1304 of FIG. 13B, since it includes only image areas ("1" signal), the determination result becomes nine. In the case of a predetermined area 1305 of FIG. 13C, since it includes both image areas and non-image areas, the determination result becomes four. Thus, if the determination result is more than zero and less than M×N, it means that the area is an area including a few or several image areas. However, if many image areas are included in the acquisition area in the case of paper fingerprint, the collation rate at the time of collation will decrease, and accordingly such inclusion is not desirable. Therefore, suppose that M×N is 16×16, if the determination result is 0-50, the area is defined as "almost non-image area"; if the determination result is 51-150, the area is defined as "paper fingerprint desired area"; and if the determination result is 151-256, the area is defined as "almost image area". Then, it is desirable that at a time when "paper fingerprint desired area" is detected, the acquisition area is determined. In Step S1105, it is determined whether the paper fingerprint area is detected in the pervious step S1104. If a desired paper fingerprint area cannot be detected, the flow proceeds to Step S1108. If the paper fingerprint area can be detected, the flow proceeds to Step S1106.

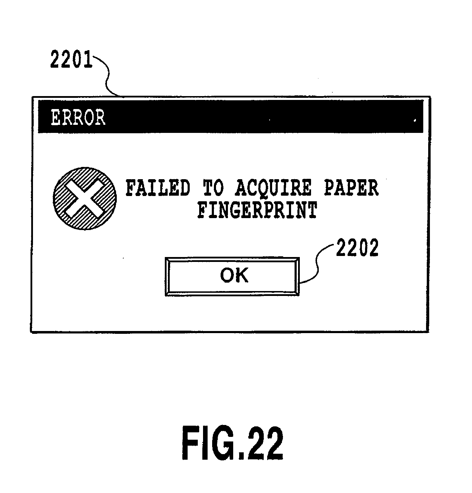

In Step S1106, the area detected in the previous Step S1104 is determined as the paper fingerprint area, and its area information is sent to the RAM 302 using an unillustrated data bus. In Step S1107, the image data corresponding to the area information determined in the previous Step S1106 is acquired by extracting it from the image data acquired in Step S1101. The acquired image data is sent to the RAM 302 using an unillustrated data bus. In Step S1108, in order to inform a user of fail in acquisition of paper fingerprint information, the error is notified to the operation panel 12 through the operation panel I/F 305. The control section that received the error makes an error message, as shown in FIG. 22 be displayed. A reference numeral 2201 shows error message appearance and a reference numeral 2202 shows an OK button.

A decode section 508 detects the existence of coded image data when it exists in the image data outputted from the masking processing section 501. Then the detected coded image data is decoded to take out information.

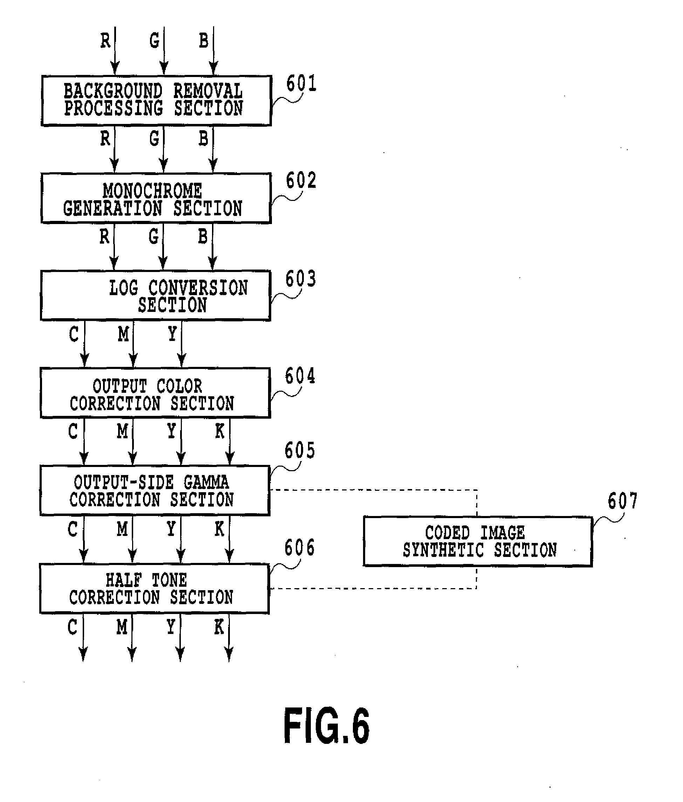

<Detailed explanation of the printer image processing section 315 (FIG. 6) >

FIG. 6 shows a flow of processing performed in the printer image processing section 315 in FIG. 6.

A background removal processing section 601 eliminates (removes) a ground color of image data using a histogram generated in the scanner image processing section 312. Amonochrome generation section 602 converts color data into monochrome data. A Log conversion section 603 performs luminance density conversion. This Log conversion section 603 converts, for example, inputted RGB image data into CMY image data. An output color correction section 604 performs output color correction. For example, it converts inputted CMY image data into CMYK image using a table or matrix. An output-side gamma correction section 605 performs correction such that a signal value inputted into this output-side gamma correction section 605 may be proportional to the reflection density value after a copy is outputted. A coded image synthesis section 607 synthesizes the image data (original) corrected by the output-side gamma correction section 605 and the coded image data generated by <Paper fingerprint information coding processing> that will be described later. A half tone correction section 606 performs half tone processing according to the number of gray tones of the printer section for outputting. For example, received image data with higher number of half tones is converted to binary data or a 32-valued data.

Each processing section of the scanner image processing section 312 and the printer image processing section 315 is also configured to be able to output received image data without performing the processing thereon. Making data pass through a processing section without performing anyprocessing thereon will be expressed as "making it pass trough" below.

<Paper fingerprint information coding processing>

The CPU 301 is configured to be capable of reading paper fingerprint information of a predetermined area sent to the RAM 302 from the paper fingerprint information acquisition section 507, and controlling the encoding processing on the read paper fingerprint information concerned so as to generate coded image data.

In this specification, the coded image means an image, such as a two-dimensional coded image and a bar code image.

Moreover, the CPU 301 is configured to be capable of so controlling that the generated coded image data may be sent to the coded image synthesis section 607 in the printer image processing section 315 using an unillustrated data bus.

The above-mentioned controls (the control of generating the coded image and the control of sending it) by executing a program stored in the RAM 302.

<Paper fingerprint information collation processing>

The CPU 301 is configured to be able to read paper fingerprint information sent to the RAM 302 from the paper fingerprint information acquisition section 507, and so control that the read paper finger print information concerned may be collated with other paper fingerprint information. Here, the other paper fingerprint information means paper fingerprint information included in the coded image data and paper fingerprint information registered in a server.

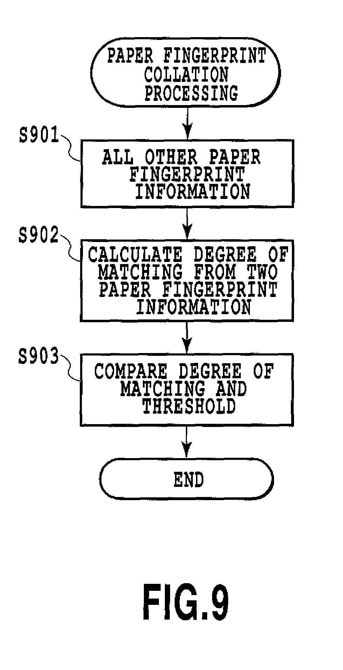

FIG. 9 is a flowchart showing this paper fingerprint information collation processing. Each step of this flowchart is controlled by the CPU 301 systematically.

In Step S901, paper fingerprint information included in the coded image data and paper fingerprint information registered in the server are taken out from the RAM 302.

In Step S902, in order to collate paper fingerprint information sent from the paper fingerprint information acquisition section 507 with paper fingerprint information taken out in Step S901, the degree of matching of the two pieces of paper fingerprint information is calculated by using Formula (1). Assume that one paper fingerprint information is the other paper fingerprint information that is shifted. The function of Formula (1) is used to calculate an error image (E) of the two pieces of paper fingerprint information by shifting by one pixel each time and finding a position at which a value so acquired becomes a minimum, namely at a position at which a difference between the two pieces of paper fingerprint information is minimized. [Formula 1]

$$E(i,j) = \frac{\sum_{x,y} \alpha_1(x,y)\alpha_2(x-i,y-j)\{f_1(x,y) - f_2(x,y)\}^2}{\sum_{x,y} \alpha_1(x,y)\alpha_2(x-i,y-j)} \quad \cdots \quad (1)$$

In Formula (1), $\alpha_1$ is the mask data in paper fingerprint information taken out (having been registered) in Step 5901 . $f_1$ is gray-scale image data in paper fingerprint information taken out (having been registered) in Step S901.

$\alpha_2$ is the mask data in paper fingerprint information (the information just now taken out) sent from the paper fingerprint information acquisition section 507 in Step S902. $f_2$ is the gray scale image data in paper fingerprint information (the information just now taken out) sent from the paper fingerprint information acquisition section 507 in Step S902.

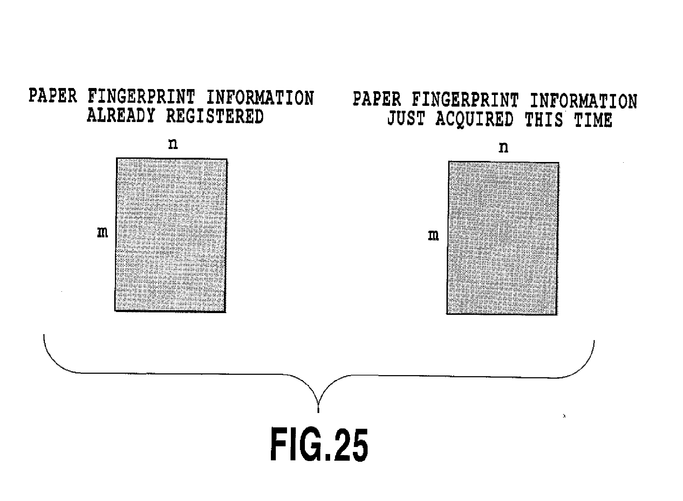

A concrete method will be explained using FIGS. 25, 35, 36, and 37. FIG. 25 shows image diagrams of paper fingerprint information already registered and paper fingerprint information just acquired this time, respectively. Each shall be composed of laterally n pixels and longitudinally m pixels.

In a function shown by Formula (1), i and j are shifted by one pixel in ranges of -n+1 to n-1 and -m+1 to m-1, respectively, and $(2n-1)\times(2m-j)$ error values (Ei, j) between the paper fingerprint information already registered and the paper fingerprint information just acquired this time are acquired, respectively. That is, error values of E (-n+1, -m+1) to E(n-1, m-1) are calculated.

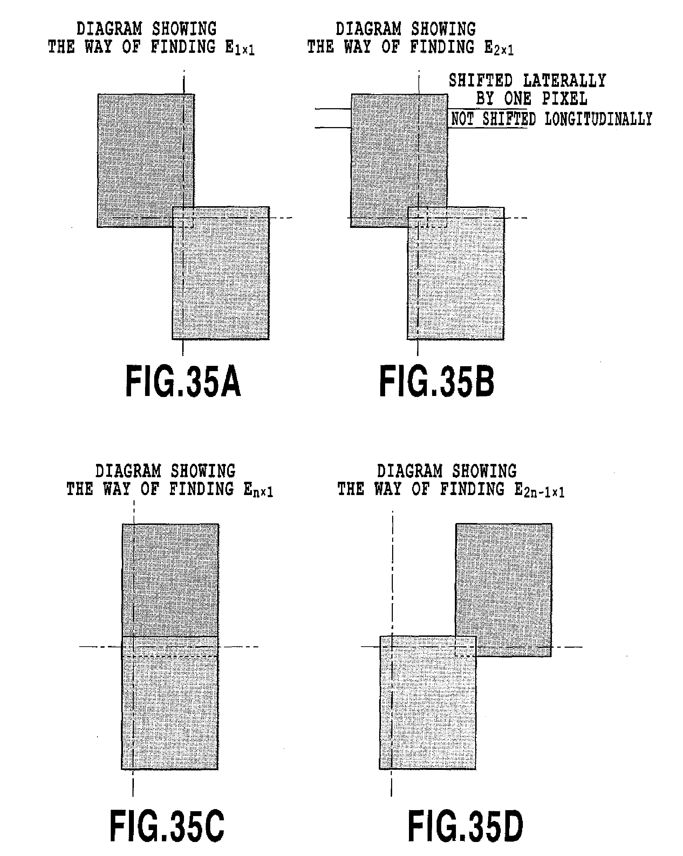

FIG. 35A is a diagram showing the way of finding $E_{1\times1}$, FIG. 35B is a diagram showing the way of finding $E_{2\times1}$, FIG. 35C is a diagram showing the way of finding $E_{n\times1}$, and FIG. 35D is a diagram showing the way of finding $E_{2n-1\times1}$. FIG. 35A shows a diagram in which lower right one pixel of the paper fingerprint information just acquired this time overlaps only upper left one pixel of the paper fingerprint information already registered. In this state, a value that can be acquired by the function of Formula (1) is designated as E (-n+1, -m+1) . FIG. 35B shows a diagram in which the paper fingerprint information just acquired this time is shifted to the right of FIG. 35A by one pixel. In this state, a value that can be acquired by the function of Formula (1) is designated as E(-n+2, -m+1). Similarly, while the paper fingerprint information just acquired this time is beingmoved, an arithmetic operation is performed. In FIG. 35C, the paper fingerprint information just acquired this time is moved until it overlaps the paper fingerprint information already registered, which enables E(0, -(m-1)) to be acquired. Moreover, in FIG. 35D, the paper fingerprint information just acquired this time is moved to the right-end point to obtain E (n-1, -m+1) . Thus, if it is shifted in a lateral direction, unity is added to the index i of the E(i, j) each time.

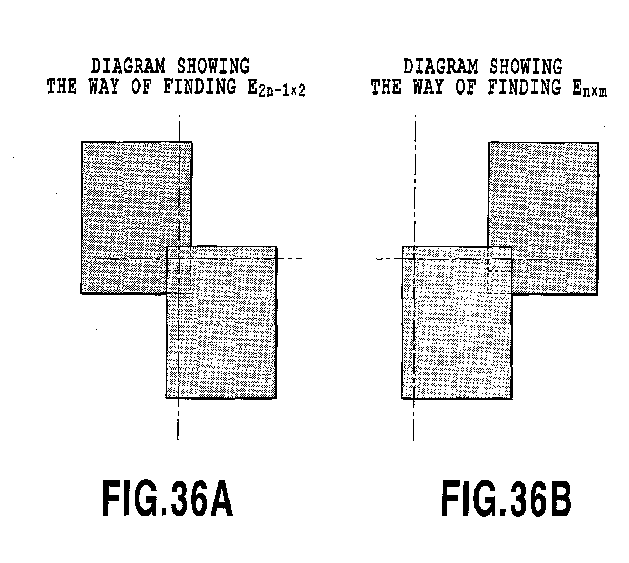

FIG. 36A is a diagram showing the way of obtaining $E_{1\times2}$, and FIG. 36B is a diagram showing the way of obtaining E2n-1-1×2. Similarly, in FIG. 36A, the paper fingerprint information just acquired this time is moved from that of FIG. 35A downward, which is a longitudinal direction, by one pixel to find a value of E(-n+1, -m+2).

Moreover, in FIG. 3B, the paper fingerprint information just acquired this time is moved to the right end-point to that of FIG. 36A to find a value of E (n-1, -m+2) .

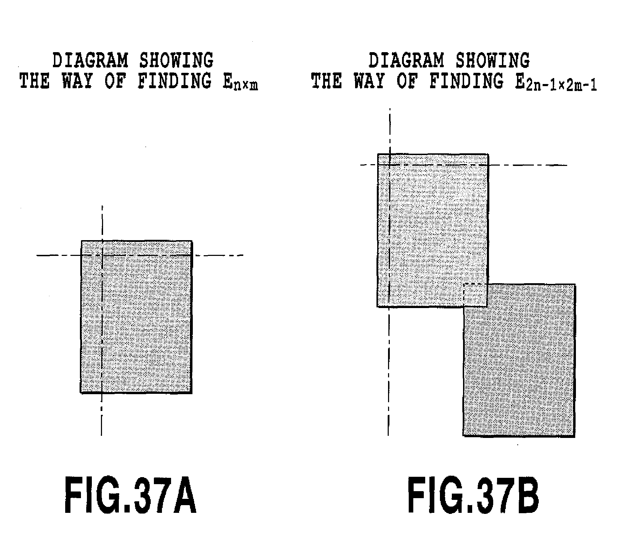

FIG. 37A is a diagram showing the way of finding $E_{n\times m}$, and FIG. 37B is a diagram showing the way of finding $E_{2n-1\times2m-1}$ FIG. 37A shows a case where the paper fingerprint information already registered and the paper fingerprint information just acquired this time are at the same position and a value of E(i, j) at this time is designated by E(0, 0).

Similarly, while the image is being shifted so that the pieces of paper fingerprint information overlaps by at least one pixel or more, the arithmetic operation is performed. Finally, E(n-1, m-1) is acquired like FIG. 36B.

Inthisway, a set consisting of $(2n-1) \times (2m-1)$ error values of E(i, j) is acquired.

Here, in order to clarify meaning of this Formula (1), a case where i = 0 and j = 0, and $\alpha_1$ (x, y) = 1 (however, x = 0-n, y = 0-m), and $\alpha_2$(x-i, y-j) - 1 (however, x = 0-n, y = 0-m) will be considered. That is, E(0, 0) is acquired in a case where $\alpha_1$(x, y) = 1 (however, x = 0-n, y = 0-m), and $\alpha_2$(x-i, y-j) = 1 (however, x = 0-n, y = 0-m).

Incidentally, i = 0 and j = 0 indicate that the paper fingerprint information already registered and the paper fingerprint information just acquired this time are for the same position, as of FIG. 37.

Here, $\alpha_1$(x, y) = 1 (however, x = 0-n, y = 0-m) indicates that all the pixels of the registered paper fingerprint information are bright. In other words, $\alpha1$(x, y) = 1 indicates that, when the registered paper fingerprint information was acquired, there were neither color materials, such as toner and ink, nor dust on the paper fingerprint acquisition area at all.

Moreover, $\alpha_2$(x-i, y-j) = 1 (however, x = 0-n, y = 0-m) indicates that all the pixels of the paper fingerprint information just acquired this time are bright. In other words, $\alpha_2$(x-i, y-j) = 1 indicates that, when the paper fingerprint information just now acquired is acquired, there were neither color materials, such as toner and ink, nor dust on the paper fingerprint acquisition area at all.

When both $\alpha_1$(x, y) = 1 and $\alpha_2$(x-i, y-j) = 1 hold for all the pixels in this way, Formula (1) will be expressed as follows. [Formula 2]

$$E(0,0) = \sum_{x=0, y=0}^{n, m} \{f_1(x, y) - f_2(x, y)\}^2 \ldots \quad (2)$$

This {$f_1$ (x, y) - $f_2$ (x, y) } represents a cubed value of a difference between the gray-scale image data in the paper fingerprint information already registered and the gray-scale image data in the paper fingerprint information just now taken out. Therefore, this Formula (1) will be summation of squared differences between respective pixels of the two pieces of paper fingerprint information. That is, the more the pixels in each of which $f_1(x, y)$ and $f_2(x, y)$ resemble each other, the smaller value this E (0, 0) will take.

What is explained above is a method for finding E(0, 0), and by doing similarly, other E(i, j) is found. Incidentally, since the more the pixels in each of which $f_1(x, y)$ and $f_2(x, y)$ resemble each other, the smaller value E (i, j) takes. If E (k, 1) = min {E(i, j)} holds, it is known that a position at which the paper fingerprint information already registered was acquired and a position at which paper fingerprint information just now acquired are shifted from each other by k, 1.

<Meaning of $\alpha$>

The numerator of Formula (1) means a result that $\{f_1(x, y) - f_2(x-i, y-j)\}^2$ is multiplied by $\alpha_1$ and $\alpha_2$ (to be exact, a total value is calculated further by a symbol $\Sigma$). The $\alpha_1$ and $\alpha_2$ indicate zero for a pixel of a thick color and unity for a pixel of a thin color.

Therefore, when either (or both) of $\alpha_1$ or $\alpha_2$ is zero, $\alpha_1\alpha_2\{f_1(x, y) - f_2(x-i, y-j)\}^2$ will be zero.

That is, this indicates that when in either (or both) piece of paper fingerprint information of a targeted pixel is of a thick color, a density difference in the pixel is not considered. This is because a pixel on which dust or color material is placed is disregarded.

Since this processing increases or decreases the number of terms to be summed by $\Sigma$ symbol, normalization is performed by dividing the numerator with a total number, $\Sigma\alpha_1(x, y)\alpha_2(x-i, y-j)$ . Note that an error value E(i, j) such that $\Sigma\alpha_1(x, y) \alpha_2(x-i, y-j)$ in the denominator of Formula (1) becomes zero shall not be included in a set of error values (E (- (n-1), - (m-1)) to E(n-1, m-1)) that will be described later.

<Method for determining a degree of matching>

As described above, when E (k, 1) =min {E(i, j)} holds, it is known that a position at which registered paper fingerprint information was acquired and a position at which paper fingerprint information just now acquired are shifted from each other by k, 1.

Following this, a value that indicates how much two pieces of paper fingerprint information are like each other (this value is called a degree of matching) is calculated using the E (k, 1) and other E(i, j).

First, a mean value (40) is found from a set of error values (for example, E (0, 0) = 10*, E (0, 1) = 50, E (1, 0) = 50, E(1, 1) = 50) acquired by the function of Formula (1) .... (A)

Here, * has no relation with a value. This symbol is described just to attract attention. A reason to attract attention will be described later.

Next, each of the error values (10*, 50, 50, 50) is subtracted from the mean valued to obtain a new set (30*, -10, -10, -10). .... (B)

A standard deviation ($30\times30 + 10\times10 + 10\times10 + 10\times10 = 1200$, 1200/4 = 300, $\sqrt{300} = 10\sqrt{3}$ = approximately 17) is calculated from this new set. Further, the above-mentioned new set is divided by 17 to find quotients (1*, -1, -1, -1) ..... (C)

A maximum among the calculated values is designated as the degree of matching (1*). Note that this very value of 1* is a value corresponding to a value of E(0, 0) = 10*. The value of (0, 0) is a value that satisfies E (0, 0) = min {E (i, j)} in this case.

<Conceptual explanation of the method for determining the degree of matching>

The processing of performing the above-mentioned method for determining the degree of matching is, in a short, to calculate how far the smallest error value in a set of a plurality of error values is away from the average error value (A and B).

Then the degree of matching is calculated by dividing this degree of separation by the standard deviation (C) .

Finally, a collation result is acquired by comparing the degree of matching with the threshold (D).

Incidentally, the standard deviation means an average value of a "difference between each error value and the mean value." In other words, the standard deviation is a value that shows roughly how large variation is arisen overall in a set.

Division of the above-mentioned degree of separation with such an overall variation value will show how much the min{E(i, j)} is small in a set of E(i, j) (prominently small or small only slightly).

Then, when min {E(i, j)} is prominently small in the set of E (i, j), the calculation is determined valid; when otherwise, it is determined invalid.

<Reason that, only when min{E(i, j)} is prominently small in the set of E (i, j), the calculation is determined valid>

Here, assume that registered paper fingerprint information and paper fingerprint information just now acquired are acquired from the same paper.

In this assumption, there must exist a location (shifted position) where the registered paper fingerprint information and the paper fingerprint information just now acquired coincide. At this time, since at this position the registered paper fingerprint information and the paper fingerprint information just now acquired coincide extremely well, E(i, j) should be very small.

On the other hand, if a position is shifted from this position even a little, there is no association between the registered paper fingerprint information and the paper fingerprint information just now acquired. Therefore, at such a position, (i, j) should become a usual large value.

Therefore, a condition that "two pieces of paper fingerprint information were acquired from the same paper" agrees with a condition that "the smallest E(i, j) is prominently small in the set of E(i, j)."

<Paper fingerprint information collation processing> will be explained again.

In Step S903, the degree of matching of two pieces of paper fingerprint information acquired in Step S902 is compared with a predetermined threshold and "Valid" or "Invalid" is determined. Incidentally, sometimes the degree of matching is called the degree of similarity. Sometimes, a comparison result of the degree of matching and the predetermined threshold is called a collation result.

Explanation of the controller 11 is finished here.

<Explanation of an operation screen>

FIG. 7 shows an initial screen in image forming apparatus 10. An area 701 shows whether the image forming apparatus 10 is in a state of "Ready to copy," and shows a set up number of copies. The original selection tab 704 is a tab for selecting types of originals. When this tab is pressed, a selection menu of three kinds of character mode, photograph mode, and character-photograph mode will be displayed in a pup up menu. A finishing tab 706 is a tab for setting various finishing. A double-sided setting tab 707 is a tab for setting double-sided reading and double-sided printing. A reading mode tab 702 is a tab for selecting a reading mode of a original. When this tab is pressed, a selection menu of three kinds of color mode, black mode, and auto mode (ACS) will be displayed in a pup-up menu. Incidentally, when the color mode is selected, color copying is performed, and when the black mode is selected, monochrome copying is performed. When the ACS is selected, a copy mode is determined by the monochrome-color determination signal described above.

An area 708 is a tab for selectingpaper fingerprint information registration processing. The paper fingerprint information registration processing will be described later. An area 709 is a tab for selecting paper fingerprint information collation processing. This paper fingerprint information collation processing will be described later.

An area 710 is a tab for setting a security level in the paper fingerprint information registration processing. The processing of security level setting will be described later. An area 711 is a tab for setting a collation rate in the paper fingerprint information registration processing. The processing of collation rate setting will be described later.

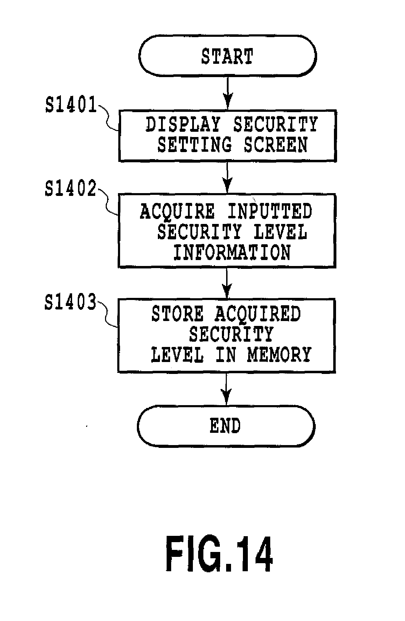

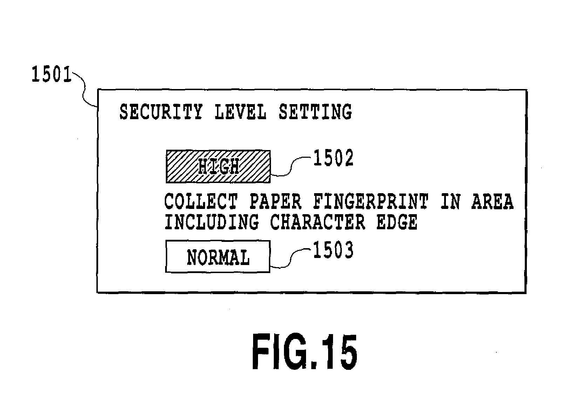

FIG. 14 is a flowchart showing security setting processing. In Step S1401, information selected by the tab in the above-mentioned area 710 is received and a security setting screen is displayed. FIG. 15 shows one example of the security setting screen. A reference numeral 1501 shows appearance of the security setting screen. A reference numeral 1502 is a tab for setting the security level to "High." A reference numeral 1503 is a tab for setting the security level to "Normal." In Step S1402, the security level being set on the above-mentioned security setting screen is acquired. In Step S1403, the security level acquired in the previous step is sent to the RAM 302 using an unillustrated data bus. The above-mentioned security level may be increased or decreased in kind depending on the system.

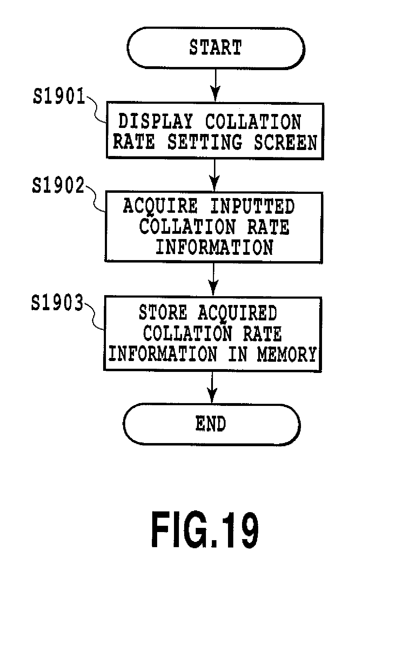

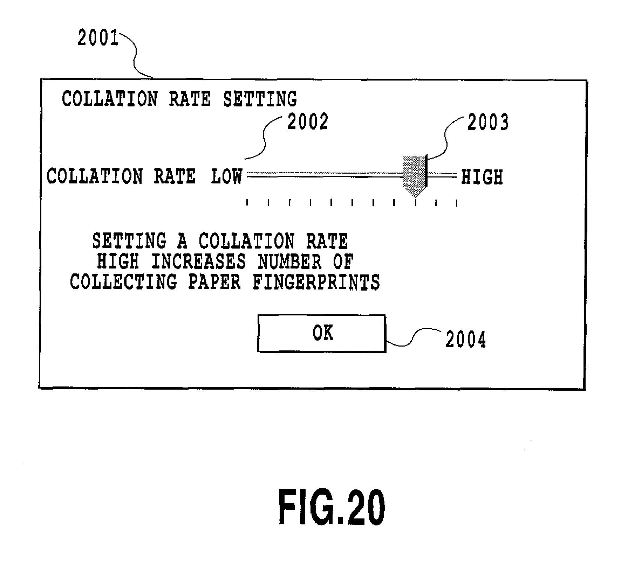

FIG. 19 is a flowchart showing collation rate setting processing. In Step S1901, information selected by the tab of the above-mentioned area 711 is received and a collation rate setting screen is displayed. FIG. 20 shows one example of the collation rate setting screen. A reference numeral 2001 shows appearance of the collation rate setting screen. A reference numeral 2002 shows a slider bar for indicating the collation rate, 2003 an arrow moving on the slider bar, and 2004 an OK button. By moving the arrow 2003 to the right and left, the collation rate is set up. A collation rate goes lower as the arrow 2003 is moved more to the left and goes higher as it is moved more to the right. Since the setting method shown here is just one example, other configuration may be used as long as the collation rate can be set up. In Step S1902, a collation rate that is set in the collation rate setting screen described above is acquired. In Step S1903, the collation rate acquired in the previous step is sent to the RAM 302 using an unillustrated data bus.

<Operation when the tab of the paper fingerprint information registration processing is pressed>

Next, the paper fingerprint information registration processing that is executed when the start key is pressed after the paper fingerprint information registration tab 708 shown in FIG. 7 is pressed by the user will be explained.

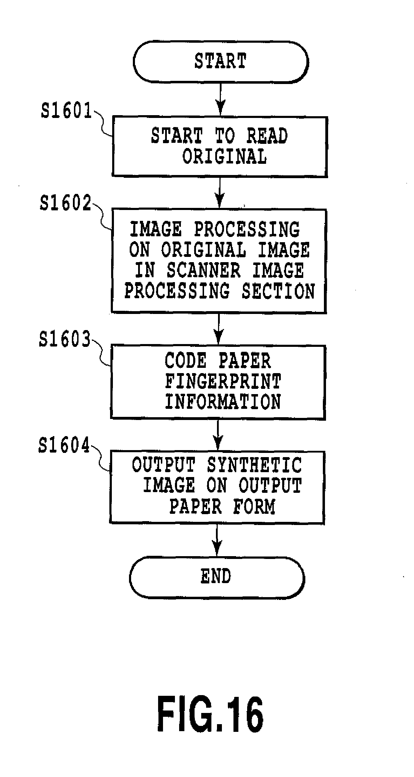

FIG. 16 is a flowchart showing overall processing at the time of a paper fingerprint information acquisition mode. In Step S1601, the CPU 301 so controls that the already printed paper form read by the scanner section 13 may be sent to the scanner image processing section 312 as image data through the scanner I/F 311 . The paper form is set in a manual feed tray after being read in Step S1601.

In Step S1602, the scanner image processing section 312 sets a gain adjustment value usually smaller than the gain adjustment value at the time of reading in the shading correction section 500. Then it outputs each luminance signal value acquired by applying the above-mentioned small gain adjustment value to the image data to the paper fingerprint information acquisition section 507. After this, the paper fingerprint information acquisition section 507 acquires paper fingerprint information based on the output data. Acquisition of paper fingerprint information is processed as shown by a flowchart in FIG. 11. The details are just as described above. The paper fingerprint information acquisition processing when the security level is set up in the above-mentioned area 710 will be described later. Moreover, the paper fingerprint information acquisition processing when the collation rate is set up in the above-mentioned area 711 will be described later. Then the acquired paper fingerprint information is sent to the RAM 302 using an unillustrated data bus. After the processing in Step S1602 is ended, processing of Step S1603 begins.

In Step S1603, the CPU 301 generates a coded image by encoding paper fingerprint information, and so controls that the generated coded image data may be sent to the coded image synthesis section 607 in the printer image processing section 315.

In Step S1604, the coded image synthesis section 607 prepares a synthetic image with the coded image data generated in Step S1603 and image data to be printed on output paper. Incidentally, in this flow, since it is data already printed thereon, synthesis of the coded image data and the image data is not performed and the coded image data only is printed on the paper. Then, the half tone correction section 606 performs the half tone processing on the synthetic image data acquired by the synthesis concerned in accordance with the number of gray tones of the printer section to which the data is outputted. The synthetic image data after the half tone processing is sent to the printer section 14 through the printer I/F 314.

<Paper fingerprint information registration processing (at the time of setting a security level)>

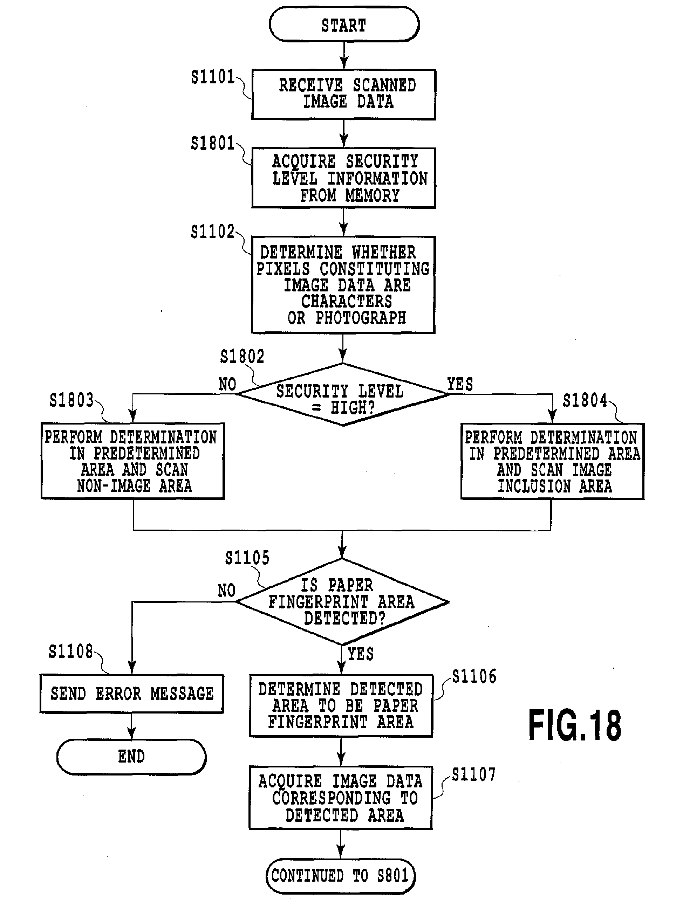

FIG. 18 shows details about the paper fingerprint information registration processing when the above-mentioned security level is set up. Step S1101 is just as described above. In Step S1801, security level information being set in the RAM 302 by the above-mentioned security setting processing is acquired. Step S1102 is just as described above. In Step S1802, it is determined on which level the security level acquired in Step S1802 is set up. If the security level is determined high, the flow proceeds to Step S1804. If the security level is not high but "normal" that was described as the example in FIG. 15 or other level, the flow proceeds to Step S1803. In Step S1803, the same processing as the edge determination in Step S1104 described above is performed. However, here, the inspection is performed together with a fact that a predetermined size area is a non-image area. A method of inspection may be that the inspection is started from a position at which the image data exists and this step is ended at a time when a non-image area is extracted. In Step S1804, the same processing as the edge determination in Step S1104 described above is performed. However, here, the inspection is done along with a fact that the predetermined size area is an area including an image. A method of inspection may be that the inspection is started from a position at which the image data exists and this step is ended at a time when an area including an image area is extracted.

Steps S1105 to Step S1107 are the same as those of the processing described above. An area extracted in Step S1803 or Step S1804 is determined to be the paper fingerprint area and image data corresponding to the area is acquired. If the area cannot be extracted in Step S1803 or Step S1804, an error is sent. Thus, it is possible to change the paper fingerprint area that is intended to be acquired to "only white background" or "including characters" by branching an extraction condition of an image area by the edge determination according to the security level described above. Incidentally, a plurality of kinds of security levels may exist just as described above. In that case, what is necessary is just to make the flow branch in the above-mentioned Step S1802 according to the security level and perform the edge determination processing stepwise. For example, the processing may be that if the security level is "minimum", a "white" area will be extracted; and if the security level is "low", a "10% character inclusion" area will be extracted or the like.

<Paper fingerprint information registration processing (at the time of setting a collation rate)>

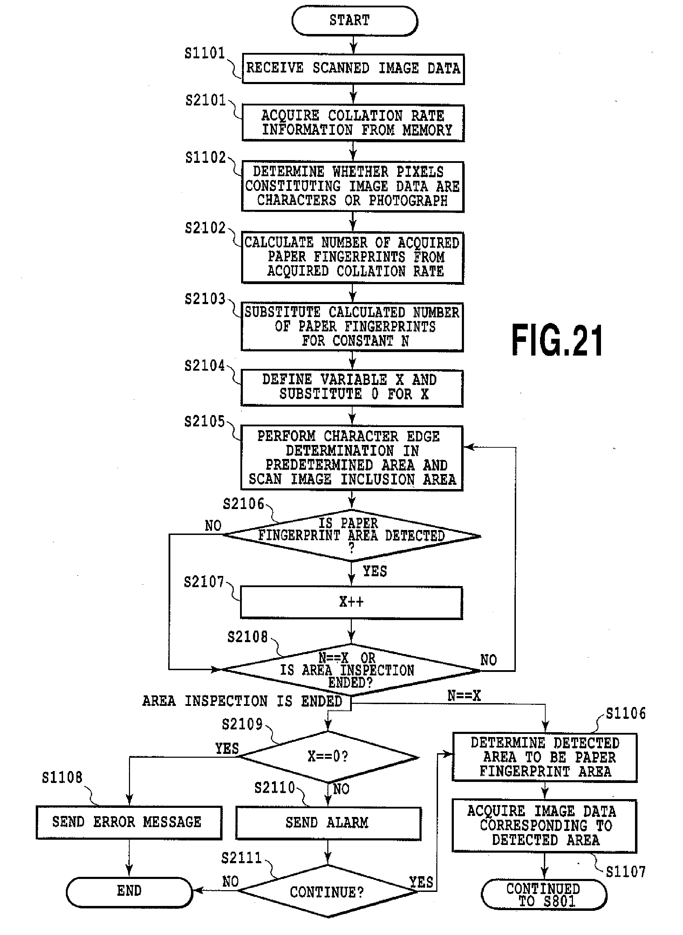

FIG. 21 shows details about the paper fingerprint information registration processing when the above-mentioned collation rate is set up. Step S1101 is just as described above. In Step S2101, the collation rate information being set in the RAM 302 by the collation rate setting processing described above is acquired. Step S1102 is just as described above. In Step S2102, the number of paper fingerprint areas to acquire paper fingerprint information is calculated from the collation rate information acquired in Step S2101. For example, the collation rate is quantified by values of 0 (low) to 100 (high). The method may be as follows: if the collation rate is 0-20, the number of paper fingerprint area is defined as one, 21-40 as two, 41-60 as three, 61-80 as four, and 80-100 as five, and the number of paper fingerprints is calculated according to the acquired collation rate. In Step S2103, the number of acquired paper fingerprints acquired in Step S2102 is assigned to the constant N. In Step S2104, a variable is defined and zero is assign to x (x is initialized) . The variable x stores the number of paper fingerprint areas. In Step S2105, the above-mentioned edge determination processing is performed and it is inspected whether the predetermined size area is an image inclusion area. In this step, the inspection shall be started from a start position of the image size and end at a point in time when the image inclusion area is extracted. Note that once acquired paper fingerprint area shall not be acquired again.

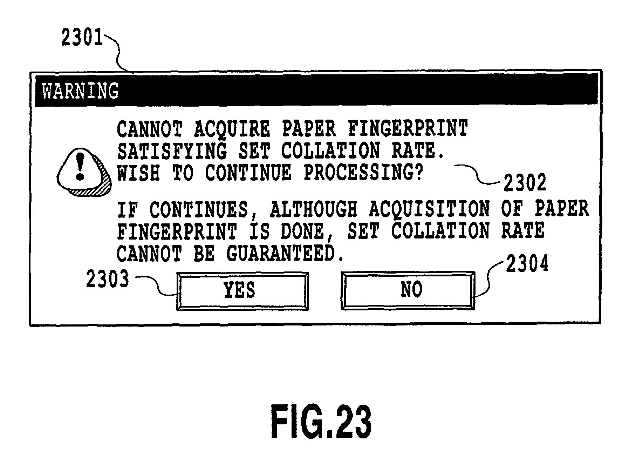

In Step S2106, it is determined whether the image inclusion area was extracted in Step S2105. If the image inclusion area was not extracted, the flow proceeds to Step S2108. If the image inclusion area was extracted, the flow proceeds to Step S2107. In Step S2107, the variable x defined in Step S2104 is incremented. In Step S2108, it is determined whether the constant N and the variable x are equal . Moreover, it is also determined whether the edge determination in Step S2105 is ended in inspection over the whole area of the image data. If the both determinations were given No's, the flow proceeds to Step S2105. If it is determined that the constant N agrees with the variable x, the flow proceeds to Step S1106. Moreover, if it is determined that the inspection is ended over the whole area of the image data, the flow proceeds to Step S2109. In Step S2109, it is determined whether the variable x is equal to zero. If it is determined that x is equal to zero, the flow proceeds to Step S1108. Processing in Step S1108 is just as described above. If x does not agree with zero, the flow proceeds to Step S2110. Since it is determined that x does not agree with the constant N in Step S2108 and further it is determined that x does not agree with zero in Step S2109, apparently the variable x is not zero although x does not reach the number of acquired paper fingerprints calculated by the acquired collation rate. Therefore, in Step S2110, in order to inform the user of the fact, an alarm is notified to the operation panel 12 through the operation panel I/F 305. The operation panel receiving the alarm displays an alarm message as shown in FIG. 23. A reference numera12301denotesalarm message appearance, 2302 an alarm character string, 2303 a "YES" button, and 2304 a "NO"button. In Step S2111, it is determinedwhichwas pressed in the alarm message display, "YES" or "NO." If the "YES" button is pressed, although the number of paper fingerprints is not so much acquired as to satisfy the collation rate that the user set, the processing is continued with the acquired number, and accordingly the flow proceeds to Step S1106. If the "NO" button is pressed, the paper fingerprint information acquisition processing is interrupted and the process is ended.

<Operation when the tab of paper fingerprint information collation processing is pressed>

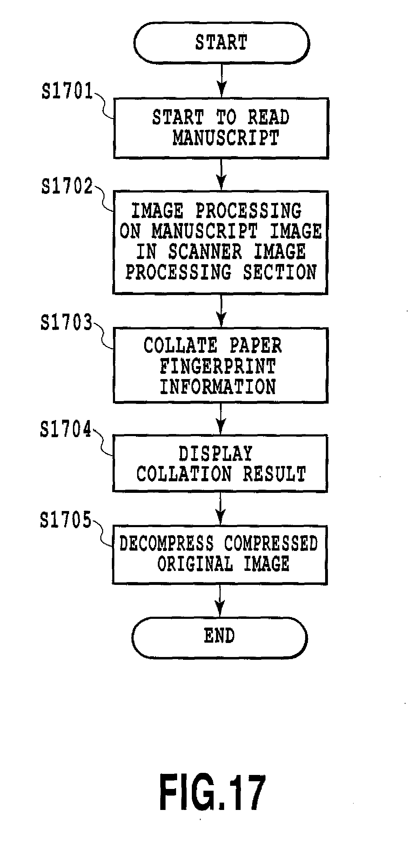

Next, an action when the start key is pressed after the paper fingerprint information collation tab 709, shown in FIG. 7, is pressed by the user will be explained using FIG. 17.

In Step S1701, the CPU 301 so controls that the original read by the scanner section 13 may be sent to the scanner image processing section 312 as image data through the scanner I/F 311. In Step S1702, the scanner image processing section 312 performs processing shown in FIG. 5 on this image data, and generates attribute data with new image data. This attribute data is attached to the image data. Moreover, in this Step S1702, the paper fingerprint information acquisition section 507 in the scanner image processing section 312 acquires paper fingerprint information (it is configured to adjust a gain of a shading correction section 500 and performs other operations to acquire paper fingerprint information just as described above). Then it sends the acquired paper fingerprint information concerned to the RAM 302 using an unillustrated data bus . Furthermore, in this Step S1702, when a coded image exists, the decode section 508 in the scanner image processing section 312 decodes the coded image concerned to acquire information. Subsequently the decode section 508 sends the acquired information concerned to the RAM 302 using an unillustrated data bus.

In Step S1703, the CPU 301 performs paper fingerprint information collation processing. This paper fingerprint information collation processing is just as explained using FIG. 9 in <Paper fingerprint information collation processing>. In Step S1704, the CPU 301 performs a control such that a result acquired by <Paper fingerprint information collation processing> (valid or invalid) is displayed on a display screen of the operation panel 12.

Second Embodiment

One embodiment in the case where a scanner is installed in a body of the image forming apparatus is described.

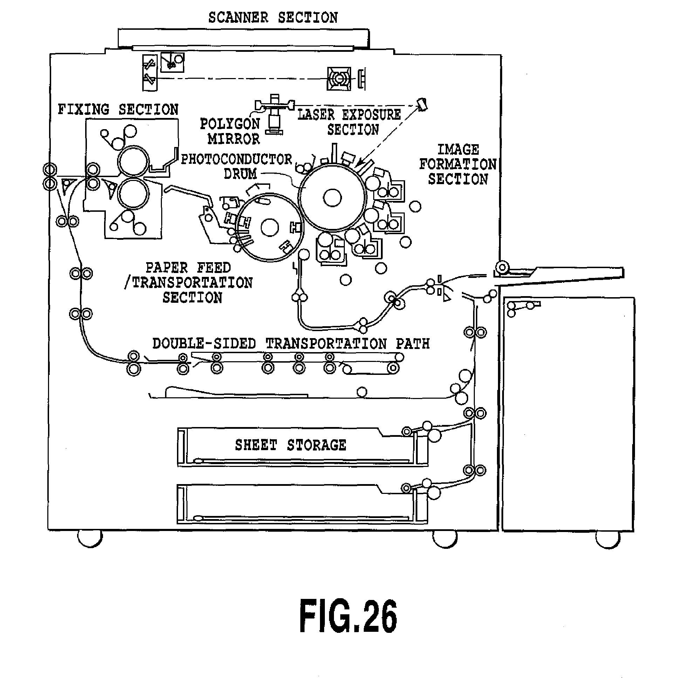

FIG. 26 shows a construction in the body of the image forming apparatus. At the time of printing, the image forming apparatus performs a series of processing: taking a paper form out of a sheet storage magazine, putting a toner image on the paper form in a photoconductor drum, and fixing the image on the paper form in a fixing section. In the second embodiment, the image forming apparatus is configured to form an image, read it, and perform the paper fingerprint information registration processing as a series of processing, by installing a scanner in post processing of the fixing section and reading the paper fingerprint by the scanner.

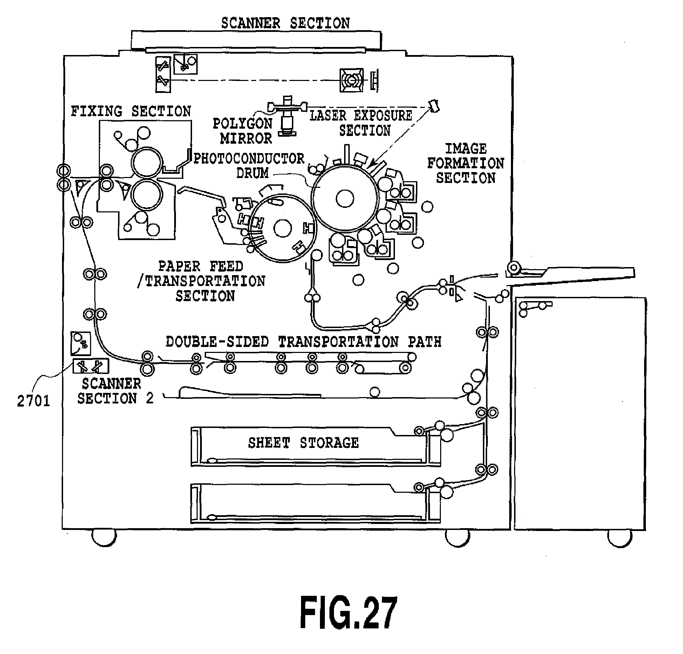

FIG. 27 shows an internal construction of the body of the image forming apparatus in this embodiment. A reference numeral 2701 is the scanner section installed inside the body.

<Operation when the tab of paper fingerprint information registration processing is pressed>

An operation to be executed when the start key is pressed after the paper fingerprint information registration tab 708, shown in FIG. 7, is pressed by the user using this image forming apparatus will be explained.

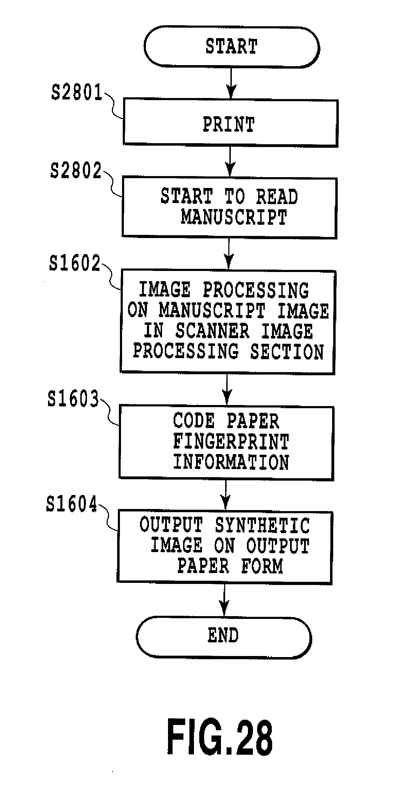

FIG. 28 shows an overall flow of the paper fingerprint information registration processing. In Step S2801, processing of forming an image on a paper form is executed based on printing information sent from a device, for example, a PC. Since processing of image formation (print) is a known technology, detailed explanation is omitted. In Step S2802, when image formation is ended in the fixing section, image reading processing is performed before discharging paper by the scanner section 2701 installed in the image forming apparatus. Steps 1602 to 1604 are the same as those of the processing explained in the first embodiment.

Thus, in the embodiment in which the scanner is installed in the image forming apparatus, image formation, reading, and paper fingerprint area registration can be completed only by processing in the body.

Third Embodiment

In the first embodiment, described was a form where an area including an image area of a certain threshold was determined as the paper fingerprint area in order to specify the area including a few or several image areas (image inclusion area) as a paper fingerprint registration area in the paper fingerprint information acquisition processing. Concretely, the edge determination is performed on an area of a predetermined size being read by a scanner section 13 as shown in the flowchart of FIG. 11 to determine inclusion of an image area. In this embodiment, as another embodiment, an embodiment where an area suitable to the paper fingerprint area, to be concrete, an area of the highest collation rate of paper fingerprint is determined to be the paper fingerprint area will be described with more detailed explanation. Here, since any controls and units other than determining an area of the highest collation rate are the same as those in the first embodiment, only what is different (another embodiment of FIG. 11) will be described.

In an area with much of printing like solid black, the fiber of paper cannot be read clearly, and accordingly the collation rate of the paper fingerprint becomes low at the time of collating a paper fingerprint. Therefore, in an area of a predetermined size, the area in which the image areas are small in number, that is, a result of the edge determination is small has a high collation rate. A method for finding the paper fingerprint area of the highest collation rate using this fact will be described below.

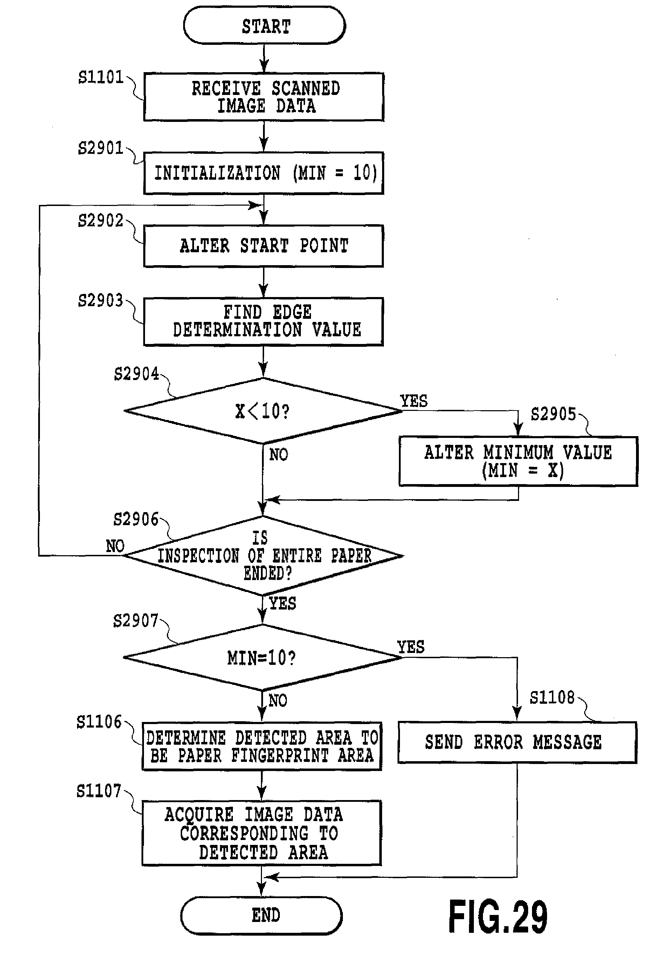

FIG. 29 is a flowchart diagram showing a control for determining the paper fingerprint area whose collation rate is the highest in image area detection processing in Step S1001.

In Step S1101, like the first embodiment, the scanner image processing section 312 receives image data read in the scanner section 13 through the scanner I/F 311.

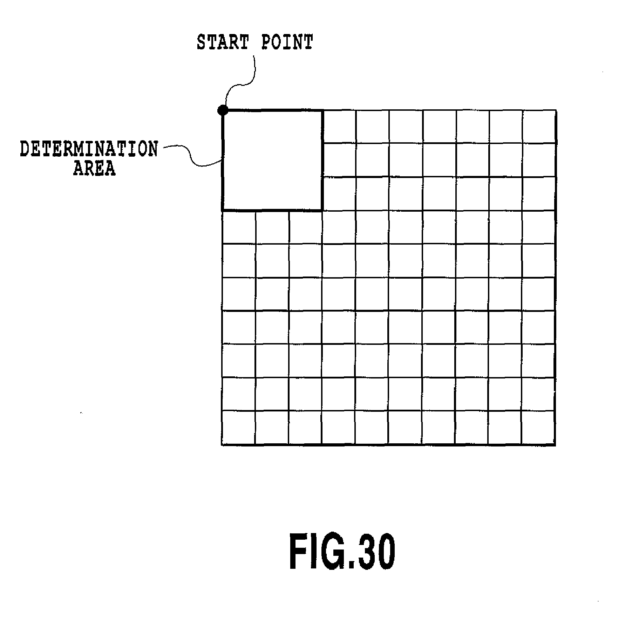

Then, in Step S2901, a result of the edge determination (hereinafter referred to as an edge determination value) and the start point of an area of a predetermined size (hereinafter referred to as a determination area) in which the edge determination is performed are initialized. Here, the initialization of the area is an upper left corner of paper. Incidentally, in this embodiment, an initial value of the edge determination is set to 10 (MIN = 10), and a determination area is specified to have an area size of 3×3 fixed. The start point shall designate a position in the upper left of the determination area (this is shown in FIG. 30).

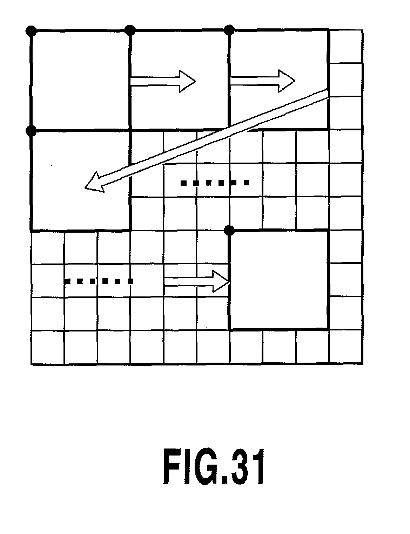

A control of executing the edge determination (the same determination as in the first embodiment) on the received data will be described below. First, in Step S2902, a start point of the determination area is altered in the image data read in StepS1101 (however, at the first time, an initialized start point shall be maintained). Although various methods are conceivable as the alteration method, this embodiment uses a method whereby the start point is altered every three point so that the determination area determined once may not be determined again as in FIG. 31. Then in Step S2903, the edge determination value of the determination area with this start point used as a reference is calculated. This edge determination value is compared with the minimum edge determination value so far being set (Step S2904). If this edge determination value is smaller than the minimum edge determination value, this value is assigned to the minimum edge determination value (Step 52905).

Regarding this above-mentioned control (Steps 52903-52906), when the start point is altered next in Step S2903, if it can be altered, the control is performed repeatedly (Here, the control is repeated up to a start point in the lower right area in FIG. 31 . This is Step S2906.). When the alteration is impossible, it is checked whether the minimum edge determination value being set in Step S2903 has been altered at lest once (Step S2907). If it has not been altered, since there is the possibility that the edge processing is not performed normally, an execution error is sent to the operation panel 12 (Step S1108). If it has been altered, the area that is given the current minimum edge determination value is determined as paper fingerprint area (Step S1106), and the image data corresponding to this area is acquired in order to register the paper fingerprint (Step S1107).

The above control makes possible to find the paper fingerprint area of the highest collation rate.

<First Derived Embodiment>

In Step S2901 of this embodiment, the minimum of the edge determination value was set to an arbitrary value (here 10) as initialization. However, the minimum may not be an arbitrary value. An area that is of fewer characters and fewer images in a predetermined area size in which determination is performed is found by doing block selection for image data received in Step S1101. An edge determination value acquired for this area may substitute for the arbitrary value (MIN). The block selection is a well-known technique (reference literature: Japanese Patent Laid-Open No. H9-51388 etc.) that investigates connectivity of images of pixels constituting the image data by analyzing them and classifies detected connect components (details are omitted). Since this technique can detect a minimum rectangle including a text and a black image, it makes possible to find the determination area of less black images. For image data that is a target on which block selection is performed, image data that is converted into binary image data by the multivalue to binary conversion section 324 beforehand shall be used.

<Second Derived Embodiment>

In Step S1107, if a location of paper fingerprint area in which the collation rate becomes highest and information whereby the paper is uniquely recognized are collated with each other and stored or printed on paper, it becomes possible to easily find paper fingerprint information for specific paper.

<Third Derived Embodiment>

Moreover, in Step S1101 in which scanned image data is received, it is possible that both rear-side and front-side pieces of image data are received, an optimal paper fingerprint area or one that gives a collation rate equal to or more than a certain threshold is searched from both the rear-side and the front-side thereof.

<Fourth Derived Embodiment>

Moreover, this embodiment can be combined with the first embodiment (that is, in the second embodiment, when an area of the highest collation rate is determined, it is possible to eliminate or add an area consisting of only a white area.

Fourth Embodiment

In each of the first and third embodiments, the embodiment that performed determination on an area of a predetermined size read by the scanner section 13 was described. Here, as another embodiment, an embodiment in which the paper fingerprint area that can be collated is detected by altering the size of the area in performing the edge determination at a certain position as a start point will be described. Incidentally, since any controls and units other than detecting a conceivable paper fingerprint area are the same as those in the first and third embodiments, only what is different (another embodiment of FIG. 11) will be described).

In the case where an area subjected to the edge determination has only an image with much of printing as solid black, paper fiber cannot be read clearly, and accordingly the collation rate at the time of collating the paper fingerprint becomes low. In light of this fact, a method for increasing areas other than the solid black area by enlarging an area to be read and determining the paper fingerprint area that can be collated will be described below.

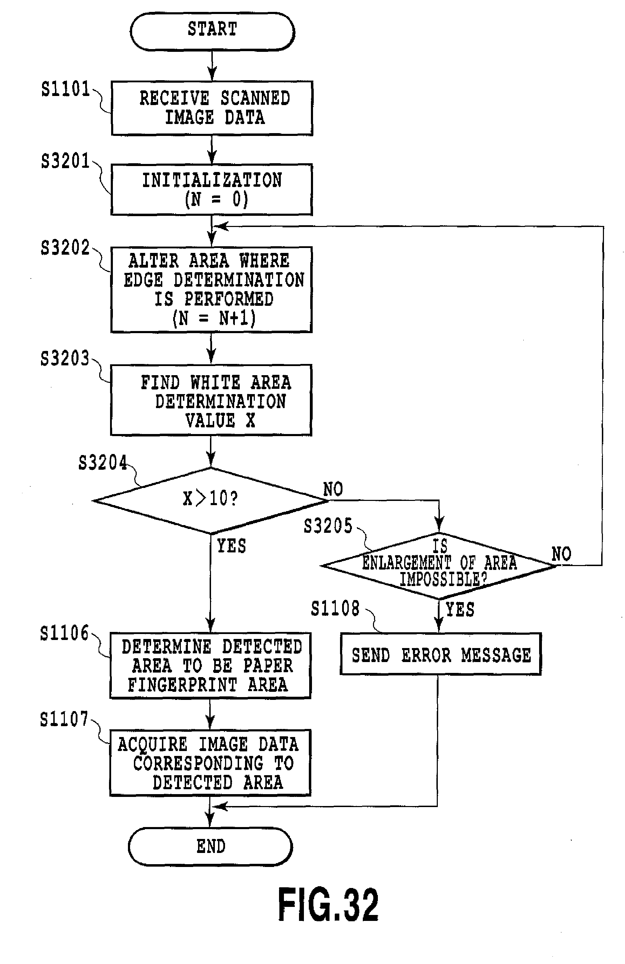

FIG. 32 is a flowchart diagram showing a control of determining a paper fingerprint area that can be collated in the image area detection processing in Step S1001. In Step S1101, like the first embodiment, the scanner image processing section 312 receives the image data read by the scanner section 13 through the scanner I/F 311. Then, in Step S3201, the size of the predetermined area (hereinafter, referred to as the determination area) in which the edge determination is performed is initialized (here, the area is set to have an area size of N×N, and N is set to N = 0).

A control to perform the white image area determination in the area altered in the receive data will be described below. Incidentally, although this white image area determination is the same control as the edge determination of the first embodiment, it is not intended to find how many image areas are included, but to find how many white areas are included. Here, if the white image areas are more than 10, it shall be determined that collation of the paper fingerprint is possible (that is, when a result of the white image area determination is not more than 10, there are may areas that cannot be read, and accordingly it is considered impossible to collate the paper fingerprint of this paper).

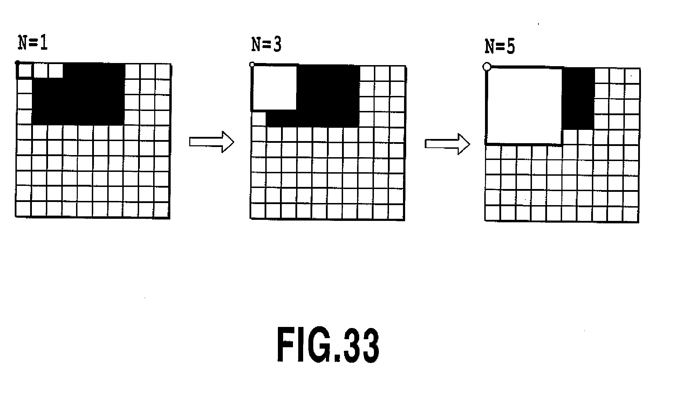

First, in Step S3202, the size of an area in which the edge determination is performed is altered (enlarged). As an alteration method, various methods are conceivable. In this embodiment, a method for enlarging the determination area by a certain ratio with a certain start point as shown in FIG. 33 (in this case, upper left corner of the paper) used as a reference is used. Then in Step S3203, the edge determination value of this determination area is calculated. Then in Step S3204, it is determined whether this edge determination value is larger than a specific threshold (here 10). If the white image area determination value is 10 or less, next it is determined whether it can be altered in Step S3203 (if the determination area becomes larger than the size of paper, alteration is impossible). If it is alterable, Steps 3202 to 3204 are repeated (here it is repeated up to N = 5 in FIG. 33) . In the case where the alteration becomes impossible, since the paper fingerprint area that can be attested is not detected, an execution error is sent to the operation panel 12 (Step S1108). On the other hand, if the white image area determination value becomes larger than 10, this area is determined as the paper fingerprint area (Step S1106), and image data corresponding to this area is acquired (Step S1107).

The above control enables the paper fingerprint area that can be collated to be found.

<Derived Embodiment>

In addition, this embodiment can be combined with the first embodiment or the third embodiment (The combination of this embodiment with the third embodiment makes it possible to detect the paper fingerprint area that can be collated and give a highest recognition rate).

Fifth Embodiment

In the embodiment so far described, a printed original was read and the paper fingerprint area was determined, as in Step S1101 of FIG. 11. In this embodiment, a method for determining the paper fingerprint area before doing printing will be described. By this method, it becomes possible to determine whether the paper fingerprint area can be detected before doing printing and alter the image data that is scheduled to be printed (not printing or altering the density) according to the paper fingerprint area. Here, since any controls and units other than detecting the paper fingerprint area from data before being printed are the same as those in the first, third, and fourth embodiments, only what is different (another embodiment of FIG. 11) will be described.

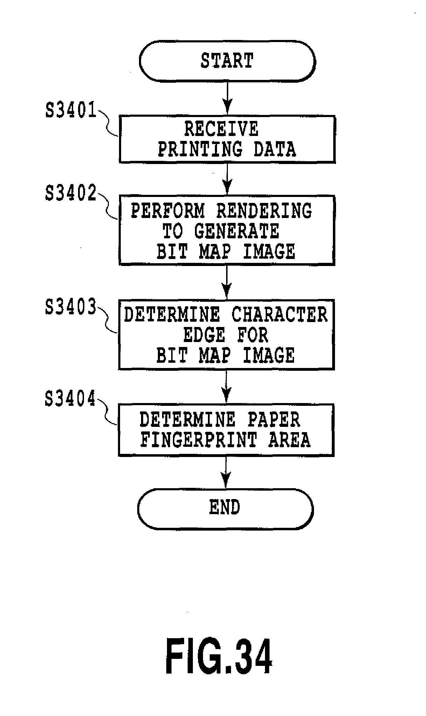

FIG. 34 is a flowchart showing a control for determining a paper fingerprint area that can be collated in the image area detection processing in Step S1001.

In Step S3401, the print data (for example, PDL data) from the PC (personal computer) is received via the LA 50 or the WAN 331. Next, this print data is interpreted by a control of the CPU 301, and the intermediate data is sent to the RIP 328. Then the RIP 328 performs rendering to generate bit map data (Step S3401). Incidentally, processing of receiving this PDL data and generating bit map data shall be a known technique, and details thereof are omitted here. The bit map data is not directly put into printing processing. The multivalue to binary conversion section 324 generates binarized image data, to which the edge determination processing of the first and third embodiments is applied to determine the paper fingerprint area (Step S3403). Incidentally, if the paper fingerprint area cannot be detected in Step S3403, error processing is performed, which is the same as in other embodiments and details thereof is omitted.

By the above processing, paper fingerprint information can be acquired from print data. Incidentally, after the paper fingerprint area is determined, it is also possible to perform printing processing of only bit map data as in Step S3404 and printing processing of synthetic data acquired by adding paper fingerprint information to the bit map data.

<First Derived Embodiment>

In the above-mentioned embodiment, an example in which the PDL data was received as print data in Step S3401 was described. However, it is also possible to receive the data read by the scanner installed in the body of the image forming apparatus as print data like the second embodiment. <Second Derived Embodiment>

In the above-mentioned embodiment, the edge determination processing is performed on binary image data to determine the paper fingerprint area. However, processing can be made fast as follows. First, an area with few edges is searched by performing image area processing (searching an area with a small amount of character information by performing common image area processing, that is, searching an area with few edges). Then, the edge determination processing is performed on this area.

Other Embodiment

Note that this invention can be applied to both a system made up of a plurality of apparatuses (for example, a computer, an interface device, a reader, a printer, etc.) and a system made up of a single apparatus (a digital multi-function machine, a printer, a facsimile apparatus, etc.).

Moreover, the object of the present invention is attained by a system or a computer (CPU or MPU) of a system reading a program code that realizes a procedure of the flowchart shown in the embodiment described above from a storage medium for storing the program code and executing it. In this case, the program code itself read from the storage medium will realize functions of the above-mentioned embodiments. Therefore, this program code and the storage medium that stores the program code will also constitute one aspect of the present invention.

As a storage medium for supplying the program code, for example, a floppy (registered trademark) disk, a hard disk, an optical disk, a magneto-optical disk, CD-ROM, CD-R, magnetic tape, a nonvolatile memory card, ROM, etc. can be used.

The execution of the program code read by the computer includes not only a case where the functions of the embodiments described above are realized but also the following case: an OS (operating system) working on the computer based on instructions of the program code performs a part of or all of actual processing and the functions of the embodiments described above are realized by that processing.

Furthermore, the program code first read from the storage medium is written in memory provided in a function extension board inserted into a computer or a function extension unit connected to a computer. Subsequently, based on instructions of the program code, a CPU or the like provided in the function extension board or the function extension unit performs a part of or all of actual processing, and the functions of the embodiments described above are realized by that processing.

Note that the embodiments described above only show examples of its embodiments in order to carry out the present invention, and these examples shall not intend to limit interpretation of a technical range of the present invention. That is, the present invention can be carried out in various forms, without departing from the technical thought or its main features.

Effect of embodiments

Each of the above configurations enables a paper fingerprint in an area of high recognition accuracy to be registered. Moreover, it becomes possible to register a paper fingerprint of a portion in which necessary information exists (if that portion is covered, necessary information cannot be read as well).

Therefore, when the originality guarantee and duplication prevention are performed using a paper fingerprint that is a characteristic of the paper itself, it becomes possible to prevent interference against security by the user. Moreover, also in paper with a large amount of printing (paper with few non-image areas), the paper fingerprint area of a high collation rate can be found, and therefore it becomes possible to set up and register paper fingerprints in a large amount of paper.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structure and functions.

The invention provides an image processing apparatus and a method therefor capable of registering a paper fingerprint at a position that considers a matching accuracy and security. The image forming apparatus executes: a paper fingerprint acquisition step of reading a paper fingerprint (S1101-S1104); a paper fingerprint registration determination step of determining whether paper fingerprint information acquired in the paper fingerprint information acquisition step is suitable as a paper fingerprint for paper (51105-51107) ; and a paper fingerprint registration step of registering a paper fingerprint detected in the paper fingerprint registration determination step as a paper fingerprint for the paper (s803).

**Claims**

1. An image processing apparatus that has a paper fingerprint information acquisition unit for reading a paper fingerprint and a paper fingerprint information collation unit for reading paper fingerprint information acquired by said paper fingerprint information acquisition unit and collating it with other paper fingerprint information,
   **characterized in that**
   said paper fingerprint information acquisition unit includes an image are detection unit for detecting a location where an image area is included, as the paper fingerprint acquisition area.

2. The image processing apparatus according to claim 1,
   **characterized in that**
   said paper fingerprint information acquisition unit acquires image information corresponding to a paper fingerprint acquisition area and adds it to paper fingerprint information, and
   said paper fingerprint information collation unit performs collation processing also to the acquired said image information at the time of collating paper fingerprint information.

**3.** The image processing apparatus according to claim 1,
**characterized in that**
saidpaper fingerprint information acquisition unit has a security level acquisition unit for acquiring a security level, and a paper fingerprint acquisition position alteration unit for altering a position of a paper fingerprint acquisition area according to the security level acquired by said security level acquisition unit.

**4.** The image processing apparatus according to any of claims 1 to 3,
**characterized in that**
said paper fingerprint information acquisition unit has
a paper fingerprint collation rate level acquisition unit for acquiring a paper fingerprint collation rate level and a plurality of pieces of paper fingerprint information acquisition unit for altering the number of paper fingerprint areas to be acquired according to a collation rate level acquired by said paper fingerprint collation rate level acquisition unit.

**5.** An image formation method of a system capable of scanning paper and specifying the paper based on a characteristic of its fiber,
**characterized by** comprising:

a paper fingerprint information acquisition step of reading a paper fingerprint by a paper fingerprint information acquisition unit; and
a paper fingerprint information collation step of reading paper fingerprint information acquired in said paper fingerprint information acquisition step by a paper fingerprint information collation unit and collating it with paper fingerprint information; and
further **characterized in that**
said paper fingerprint information acquisition step includes an image area detection step of detecting a location where a few or several image areas are included, as the paper fingerprint acquisition area, by an image area detection unit.

**6.** The image formation method according to claim 5,
**characterized in that**
image information corresponding to a paper fingerprint acquisition area is acquired and added to paper fingerprint information in said paper fingerprint information acquisition step, and
collation processing is performed also on said image information acquired at the time of collating paper fingerprint information in said paper fingerprint information collation step.

**7.** The image formation method according to claim 5,
**characterized in that**
said paper fingerprint information acquisition step has a security level acquisition step of acquiring a security level by a security level acquisition unit, and
a paper fingerprint acquisition position alteration step of altering a position of a paper fingerprint acquisition area according to the security level acquired in said security level acquisition step.

**8.** The image formation method according to any of claims 5 to 7,
**characterized in that**
said paper finger print information acquisition step has a paper fingerprint collation rate level acquisition step of paper fingerprint collation rate level by a paper fingerprint collation rate level acquisition unit,
a plurality of paper fingerprint information acquisition of altering the number of paper fingerprint areas to be acquired by a plurality of pieces of paper fingerprint information acquisition unit according to the collation level acquired in said paper fingerprint collation rate level acquisition step.

**9.** An image processing apparatus,
**characterized by** comprising:

a paper fingerprint information acquisition unit for reading a paper fingerprint;
an area determination unit for determining an area to acquire paper fingerprint information by said paper fingerprint information acquisition unit; and
a paper fingerprint registration unit for registering a paper fingerprint of the area determined by said area determination unit as a paper fingerprint for the paper.

**10.** The image processing apparatus according to claim 9,
**characterized in that**
said area determination unit determines whether an area to acquire paper fingerprint information is suitable as paper fingerprint area in terms of a ratio of the white image area and the black image area in the pager fingerprint information acquired by said paper fingerprint information acquisition unit.

**11.** The image processing apparatus according to claim 9,
further **characterized by** comprising
a paper fingerprint area alteration unit for altering the size of the paper fingerprint area that is acquired by said paper fingerprint information acquisition unit.

**12.** The image processing apparatus according to claim 9,
further **characterized by** comprising
a paper fingerprint area candidate detection unit for detecting a candidate area of paper fingerprint by block selection, and further **characterized in that** said paper fingerprint area acquisition unit is used for an area detected by said paper fingerprint area candidate detection unit.

**13.** The image processing apparatus according to claim 9,
**characterized in that**
said paper fingerprint information acquisition unit further includes a paper fingerprint determination preprocessing unit for determining a paper fingerprint acquisition area from print data before printing is performed.

**14.** The image processing apparatus according to claim 9,
**characterized in that**
said paper fingerprint information acquisition unit further includes a storage unit for, when the acquired area is determined as a paper fingerprint area, storing paper whose paper fingerprint is read and an acquired paper fingerprint area by associating the both.

**15.** The image processing apparatus according to any of claims 9 to 13,
**characterized in that**
an area in which the paper fingerprint area is acquired cannot be acquired by said area determination unit, said area determination unit is used for both sides of the paper.

**16.** An image forming method of an image processing apparatus,
**characterized by** comprising:

a paper fingerprint information acquisition step of reading a paper fingerprint by a paper fingerprint information acquisition unit;
an area determination step of determining an area to acquire paper fingerprint information in said paper fingerprint information acquisition step by an area determination unit; and
a paper fingerprint registration step of registering a paper fingerprint in the area determined in said area determination step as a paper fingerprint for paper by a paper fingerprint registration unit.

**17.** The image formation method according to claim 16,
**characterized in that**
in said area determination step, it is determined whether an area in which the determined area is suitable as a paper fingerprint area in terms of a ratio of a white image area and a black image area acquired in said paper fingerprint information acquisition step.

**18.** The image formation method according to claim 16, further **characterized by** comprising
a paper fingerprint area alteration step of altering the size of paper fingerprint area to be acquired in said paper fingerprint information acquisition step by a paper fingerprint area alteration unit.

**19.** The image formation method according to claim 16, further **characterized by** comprising
a paper fingerprint area candidate detection step of detecting a candidate area of a paper fingerprint by block selection by a paper fingerprint area candidate detection unit, and further **characterized in that**
said paper fingerprint information acquiring step is used for the area detected in said paper fingerprint area candidate detection step.

**20.** The image formation method according to claim 16,
**characterized in that**
said paper fingerprint information acquisition step further includes a paper fingerprint determination preprocessing step of determining a paper fingerprint acquisition area from printing data before printing is performed by a paper fingerprint acquisition preprocessing unit.

**21.** The image formation method according to claim 16,
**characterized in that**
said paper fingerprint information acquisition step further includes a storage step of, when an acquired area is determined as a paper fingerprint area, storing paper whose paper fingerprint is read and an acquired paper fingerprint area by collating the two with each other.

**22.** The image formation method according to any of claims 16 to 20,
**characterized in that**
if an area in which paper fingerprint area is acquired cannot be determined in said area determination step, said area determination step is used for both sides of paper.

**23.** A computer program product for making a computer execute steps of the image formation method according to claim 5.

**24.** A computer readable storage medium
**characterized by** storing
a program form making a computer execute steps of the image formation method according to claim 5.

**25.** The program
**characterized by** making
a computer perform steps of the image formation method according to claim 16.

**26.** A computer readable storage medium,
**characterized by** storing
a program that makes a computer execute steps of the image formation method according to Claim 16.

FIG.1

FIG.2

OPERATION PANEL 12

↑ LAN 50

↑ WAN 331

11

| 301 | 302 | 305 | 306 | 307 |
|---|---|---|---|---|
| CPU | RAM | OPERATION PANEL I/F | NETWORK I/F | MODEM |

310

| ROM | HDD |
|---|---|

303    304

330

308 BINARY IMAGE ROTATION SECTION

309 BINARY IMAGE COMPRESSION/ DECOMPRESSION SECTION

317

316

329 COMPRESSION SECTION

313 COMPRESSION SECTION

318 DECOMPRESSION SECTION

319 COMPRESSION SECTION

DECOMPRESSION SECTION

RIP

SCANNER IMAGE PROCESSING SECTION

ROTATION SECTION

VARIABLE POWER MAGNIFICATION SECTION

COLOR SPACE CONVERSION SECTION

BINARY TO MULTIVALUE CONVERSION SECTION

PRINTER IMAGE PROCESSING SECTION

328

312

320

321

322

323

324

315

SCANNER I/F

SYNTHETIC SECTION

THINNING SECTION

MOVE SECTION

MULTIVALUE TO BINARY CONVERSION SECTION

PRINTER I/F

311

327

326

325

314

13 SCANNER SECTION

14 PRINTER SECTION

**FIG.3**

EP 1 930 840 A2

TILE IMAGE

32-PIXELS

32-PIXELS

TILE IMAGE DATA

IMAGE

# FIG.4

FIG.5

R  G  B

┌─────────────────────────────┐
│  BACKGROUND REMOVAL         │  601
│  PROCESSING SECTION         │
└─────────────────────────────┘
R  G  B

┌─────────────────────────────┐
│  MONOCHROME                 │  602
│  GENERATION SECTION         │
└─────────────────────────────┘
R  G  B

┌─────────────────────────────┐
│  LOG CONVERSION             │  603
│  SECTION                    │
└─────────────────────────────┘
C  M  Y

┌─────────────────────────────┐
│  OUTPUT COLOR               │  604
│  CORRECTION SECTION         │
└─────────────────────────────┘
C  M  Y  K

┌─────────────────────────────┐
│  OUTPUT-SIDE GAMMA          │  605
│  CORRECTION SECTION         │
└─────────────────────────────┘
C  M  Y  K

┌─────────────────────────────┐          ┌──────────────────────────┐
│  HALF TONE                  │  606     │  CODED IMAGE             │  607
│  CORRECTION SECTION         │          │  SYNTHETIC SECTION       │
└─────────────────────────────┘          └──────────────────────────┘
C  M  Y  K

# FIG.6

27

| COPY | SEND | BOX |
|------|------|-----|

READY TO COPY 701

708

REGISTER PAPER FINGERPRINT INFORMATION

709

COLLATE PAPER FINGERPRINT INFORMATION

702

AUTO

704

710

SET SECURITY LEVEL

711

SET COLLATION RATE

CHARACTER-PHOTOGRAPH MODE

706

SHIFT SORT

707

DOUBLE-SIDED

APPLICATION MODE

705

# FIG.7

PAPER FINGERPRINT
ACQUISITION
PROCESSING

S801 — CONVERT INTO
GRAY-SCALE IMAGE

S802 — GENERATE MASK DATA

S803 — STORE GRAY-SCALE
IMAGE DATA AND
MASK DATA AS
PAPER FINGERPRINT
INFORMATION

END

# FIG.8

PAPER FINGERPRINT
COLLATION
PROCESSING

S901 — ALL OTHER PAPER
FINGERPRINT
INFORMATION

S902 — CALCULATE DEGREE OF
MATCHING FROM TWO
PAPER FINGERPRINT
INFORMATION

S903 — COMPARE DEGREE OF
MATCHING AND
THRESHOLD

END

# FIG.9

START

S1001 — IMAGE AREA
DETECTION UNIT

S801 — CONVERT INTO
GRAY-SCALE IMAGE

S802 — GENERATE MASK DATA

S803 — STORE GRAY-SCALE
IMAGE DATA AND
MASK DATA AS
PAPER FINGERPRINT
INFORMATION

END

# FIG.10

START

S1101 — RECEIVE SCANNED IMAGE DATA

S1102 — DETERMINE WHETHER PIXELS CONSTITUTING IMAGE DATA ARE CHARACTERS OR PHOTOGRAPH

S1103 — ONLY WHITE AREA?

YES → CONTINUED TO S801

NO

S1104 — DETERMINE CHARACTER EDGE IN PREDETERMINED AREA

S1105 — IS PAPER FINGERPRINT AREA DETECTED?

NO → S1108 — SEND ERROR MESSAGE → END

YES

S1106 — DETERMINE DETECTED AREA TO BE PAPER FINGERPRINT AREA

S1107 — ACQUIRE IMAGE DATA CORRESPONDING TO DETECTED AREA

CONTINUED TO S801

FIG.11

**FIG.12A**

1202

1201

**FIG.12B**

1202

1203

1201

1302

1303

1301

**FIG.13A**

1302

1304

1301

**FIG.13B**

1302

1305

1301

**FIG.13C**

START

S1401 DISPLAY SECURITY
SETTING SCREEN

S1402 ACQUIRE INPUTTED
SECURITY LEVEL
INFORMATION

S1403 STORE ACQUIRED
SECURITY
LEVEL IN MEMORY

END

# FIG.14

1501

SECURITY LEVEL SETTING

HIGH ⌐1502

COLLECT PAPER FINGERPRINT IN AREA
INCLUDING CHARACTER EDGE

NORMAL ⌐1503

# FIG.15

START

S1601 — START TO READ ORIGINAL

S1602 — IMAGE PROCESSING ON ORIGINAL IMAGE IN SCANNER IMAGE PROCESSING SECTION

S1603 — CODE PAPER FINGERPRINT INFORMATION

S1604 — OUTPUT SYNTHETIC IMAGE ON OUTPUT PAPER FORM

END

FIG.16

START

S1701 — START TO READ MANUSCRIPT

S1702 — IMAGE PROCESSING ON MANUSCRIPT IMAGE IN SCANNER IMAGE PROCESSING SECTION

S1703 — COLLATE PAPER FINGERPRINT INFORMATION

S1704 — DISPLAY COLLATION RESULT

S1705 — DECOMPRESS COMPRESSED ORIGINAL IMAGE

END

# FIG.17

START

S1101 — RECEIVE SCANNED IMAGE DATA

S1801 — ACQUIRE SECURITY LEVEL INFORMATION FROM MEMORY

S1102 — DETERMINE WHETHER PIXELS CONSTITUTING IMAGE DATA ARE CHARACTERS OR PHOTOGRAPH

S1802 — SECURITY LEVEL = HIGH?

NO

S1803 — PERFORM DETERMINATION IN PREDETERMINED AREA AND SCAN NON-IMAGE AREA

YES

S1804 — PERFORM DETERMINATION IN PREDETERMINED AREA AND SCAN IMAGE INCLUSION AREA

S1105 — IS PAPER FINGERPRINT AREA DETECTED?

NO

S1108 — SEND ERROR MESSAGE

END

YES

S1106 — DETERMINE DETECTED AREA TO BE PAPER FINGERPRINT AREA

S1107 — ACQUIRE IMAGE DATA CORRESPONDING TO DETECTED AREA

CONTINUED TO S801

FIG.18

START

S1901 — DISPLAY COLLATION
RATE SETTING SCREEN

S1902 — ACQUIRE INPUTTED
COLLATION RATE
INFORMATION

S1903 — STORE ACQUIRED
COLLATION RATE
INFORMATION IN MEMORY

END

# FIG.19

2001

COLLATION RATE SETTING

2002          2003

COLLATION RATE LOW ══════════▉═══HIGH

SETTING A COLLATION RATE
HIGH INCREASES NUMBER OF
COLLECTING PAPER FINGERPRINTS

OK          2004

# FIG.20

**FIG.21**

START

S1101 — RECEIVE SCANNED IMAGE DATA

S2101 — ACQUIRE COLLATION RATE INFORMATION FROM MEMORY

S1102 — DETERMINE WHETHER PIXELS CONSTITUTING IMAGE DATA ARE CHARACTERS OR PHOTOGRAPH

S2102 — CALCULATE NUMBER OF ACQUIRED PAPER FINGERPRINTS FROM ACQUIRED COLLATION RATE

S2103 — SUBSTITUTE CALCULATED NUMBER OF PAPER FINGERPRINTS FOR CONSTANT N

S2104 — DEFINE VARIABLE X AND SUBSTITUTE 0 FOR X

S2105 — PERFORM CHARACTER EDGE DETERMINATION IN PREDETERMINED AREA AND SCAN IMAGE INCLUSION AREA

S2106 — IS PAPER FINGERPRINT AREA DETECTED ? — NO

YES

S2107 — X++

S2108 — N==X OR IS AREA INSPECTION ENDED? — NO

AREA INSPECTION IS ENDED

N==X

S1106 — DETERMINE DETECTED AREA TO BE PAPER FINGERPRINT AREA

S2109 — X==0? — YES

NO

S1108 — SEND ERROR MESSAGE

S2110 — SEND ALARM

S1107 — ACQUIRE IMAGE DATA CORRESPONDING TO DETECTED AREA

END

S2111 — CONTINUE? — NO / YES

CONTINUED TO S801

FIG.22

2301

**WARNING**

CANNOT ACQUIRE PAPER FINGERPRINT
SATISFYING SET COLLATION RATE.
WISH TO CONTINUE PROCESSING?          2302

IF CONTINUES, ALTHOUGH ACQUISITION OF PAPER
FINGERPRINT IS DONE, SET COLLATION RATE
CANNOT BE GUARANTEED.          2304

2303   | YES |          | NO |

## FIG.23

```
                    ┌─────────────────┐
                    │     START       │
                    └─────────────────┘
                             │
                             ▼
S1001 ─┐        ╔═╤═════════════════╤═╗
       └─       ║ │   IMAGE AREA    │ ║
                ║ │ DETECTION UNIT  │ ║
                ╚═╧═════════════════╧═╝
                             │
                             ▼
S801 ─┐         ┌─────────────────────┐
      └─        │   CONVERT INTO      │
                │  GRAY-SCALE IMAGE   │
                └─────────────────────┘
                             │
                             ▼
S802 ─┐         ┌─────────────────────┐
      └─        │ GENERATE MASK DATA  │
                └─────────────────────┘
                             │
                             ▼
S2401 ─┐        ┌─────────────────────┐
       └─       │  STORE IMAGE DATA,  │
                │ GRAY-SCALE IMAGE DATA, │
                │ AND MASK DATA AS PAPER │
                │ FINGERPRINT INFORMATION │
                └─────────────────────┘
                             │
                             ▼
                    ┌─────────────────┐
                    │      END        │
                    └─────────────────┘
```

# FIG.24

PAPER FINGERPRINT INFORMATION
ALREADY REGISTERED

n

m

PAPER FINGERPRINT INFORMATION
JUST ACQUIRED THIS TIME

n

m

# FIG.25

SCANNER SECTION

FIXING SECTION

POLYGON
MIRROR

LASER EXPOSURE
SECTION

PHOTOCONDUCTOR
DRUM

IMAGE
FORMATION
SECTION

PAPER FEED
/TRANSPORTATION
SECTION

DOUBLE-SIDED TRANSPORTATION PATH

SHEET STORAGE

# FIG.26

SCANNER SECTION

FIXING SECTION

POLYGON MIRROR

LASER EXPOSURE SECTION

PHOTOCONDUCTOR DRUM

IMAGE FORMATION SECTION

PAPER FEED /TRANSPORTATION SECTION

DOUBLE-SIDED TRANSPORTATION PATH

2701

SCANNER SECTION 2

SHEET STORAGE

FIG.27

START

S2801 — PRINT

S2802 — START TO READ
MANUSCRIPT

S1602 — IMAGE PROCESSING
ON MANUSCRIPT IMAGE
IN SCANNER IMAGE
PROCESSING SECTION

S1603 — CODE PAPER
FINGERPRINT
INFORMATION

S1604 — OUTPUT SYNTHETIC
IMAGE ON OUTPUT
PAPER FORM

END

# FIG.28

START

S1101 — RECEIVE SCANNED IMAGE DATA

S2901 — INITIALIZATION (MIN = 10)

S2902 — ALTER START POINT

S2903 — FIND EDGE DETERMINATION VALUE

S2904 — X<10?
  YES → S2905 — ALTER MINIMUM VALUE (MIN = X)
  NO ↓

S2906 — IS INSPECTION OF ENTIRE PAPER ENDED?
  NO →
  YES ↓

S2907 — MIN=10?
  YES → S1108 — SEND ERROR MESSAGE
  NO ↓

S1106 — DETERMINE DETECTED AREA TO BE PAPER FINGERPRINT AREA

S1107 — ACQUIRE IMAGE DATA CORRESPONDING TO DETECTED AREA

END

**FIG.29**

START POINT

DETERMINATION
AREA

# FIG.30

FIG.31

```
                    ┌─────────────────┐
                    │      START      │
                    └─────────────────┘
                             │
                             ▼
S1101 ──────┐    ┌─────────────────────┐
            │    │   RECEIVE SCANNED   │
            │    │     IMAGE DATA      │
                 └─────────────────────┘
                             │
                             ▼
S3201 ──────┐    ┌─────────────────────┐
            │    │   INITIALIZATION    │
            │    │      (N = 0)        │
                 └─────────────────────┘
                             │
                             ▼
S3202 ──────┐    ┌─────────────────────┐
            │    │  ALTER AREA WHERE   │
            │    │ EDGE DETERMINATION  │
            │    │    IS PERFORMED     │
            │    │     (N = N+1)       │
                 └─────────────────────┘
                             │
                             ▼
S3203 ──────┐    ┌─────────────────────┐
            │    │   FIND WHITE AREA   │
            │    │    DETERMINATION    │
            │    │      VALUE X        │
                 └─────────────────────┘
                             │
                             ▼
S3204 ──────┐         ◇─────────────◇         NO
            │        ◇    X>10?       ◇──────────────┐
                      ◇─────────────◇               │
                             │ YES          S3205 ──┐│
                             │                    ◇──▼─────────◇   NO
                             │                   ◇     IS        ◇────┐
                             │                  ◇ ENLARGEMENT OF ◇    │
                             │                   ◇ AREA IMPOSSIBLE? ◇  │
                             │                    ◇──────────◇        │
                             │                         │ YES          │
                             │                 S1108 ──┐│              │
                             ▼                          ▼              │
S1106 ──────┐    ┌─────────────────────┐    ┌─────────────────────┐   │
            │    │ DETERMINE DETECTED  │    │ SEND ERROR MESSAGE  │   │
            │    │  AREA TO BE PAPER   │    └─────────────────────┘   │
            │    │  FINGERPRINT AREA   │              │               │
                 └─────────────────────┘              │               │
                             │                        │               │
                             ▼                        │               │
S1107 ──────┐    ┌─────────────────────┐              │               │
            │    │  ACQUIRE IMAGE DATA │              │               │
            │    │   CORRESPONDING TO  │              │               │
            │    │   DETECTED AREA     │              │               │
                 └─────────────────────┘              │               │
                             │                        │               │
                             ▼◄───────────────────────┘               │
                    ┌─────────────────┐                               │
                    │      END        │                               │
                    └─────────────────┘                               │
```

# FIG.32

N=1

N=3

N=5

FIG.33

START

S3401 — RECEIVE PRINTING DATA

S3402 — PERFORM RENDERING TO GENERATE BIT MAP IMAGE

S3403 — DETERMINE CHARACTER EDGE FOR BIT MAP IMAGE

S3404 — DETERMINE PAPER FINGERPRINT AREA

END

# FIG.34

DIAGRAM SHOWING
THE WAY OF FINDING $E_{1 \times 1}$

DIAGRAM SHOWING
THE WAY OF FINDING $E_{2 \times 1}$

SHIFTED LATERALLY
BY ONE PIXEL
NOT SHIFTED LONGITUDINALLY

**FIG.35A**

**FIG.35B**

DIAGRAM SHOWING
THE WAY OF FINDING $E_{n \times 1}$

DIAGRAM SHOWING
THE WAY OF FINDING $E_{2n-1 \times 1}$

**FIG.35C**

**FIG.35D**

DIAGRAM SHOWING
THE WAY OF FINDING $E_{2n-1 \times 2}$

# FIG.36A

DIAGRAM SHOWING
THE WAY OF FINDING $E_{n \times m}$

# FIG.36B

DIAGRAM SHOWING
THE WAY OF FINDING $E_{n \times m}$

DIAGRAM SHOWING
THE WAY OF FINDING $E_{2n-1 \times 2m-1}$

# FIG.37A

# FIG.37B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004214831 A
- JP 2004153405 A
- JP 2004112644 A
- JP 2001127983 A
- JP H951388 A